# EUROPEAN PATENT SPECIFICATION

(11) **EP 1 639 370 B1**
(45) Date of publication and mention of the grant of the patent: **02.09.2009**
(21) Application number: 04785908.7
(22) Date of filing: 27.05.2004
(51) Int. Cl.: G01N 33/543, C12Q 1/68, G01N 33/533

(54) **METHOD FOR DETECTING ANALYTES BASED ON EVANESCENT ILLUMINATION AND SCATTER-BASED DETECTION OF NANOPARTICLE PROBE COMPLEXES**
VERFAHREN ZUM NACHWEIS VON ANALYTEN AUF GRUNDLAGE VON EVANESZENZBELICHTUNG UND AUF STREUUNG BERUHENDER NACHWEIS VON NANOPARTIKELSONDENKOMPLEXEN
PROCEDE DE DETECTION D'ANALYTES FONDE SUR L'ILLUMINATION EVANESCENTE ET SUR LA DETECTION PAR DIFFUSION DE COMPLEXES DE SONDES DE NANOPARTICULES

(30) Priority: 30.05.2003 US 474569 P; 29.08.2003 US 499034 P; 04.11.2003 US 517450 P
(43) Date of publication of application: 29.03.2006
(73) Proprietor: Nanosphere, Inc., Northbrook, Illinois 60062 (US)
(72) Inventor: STORHOFF, James, J., Evanston, IL 60202 (US); LUCAS, Adam, Arlington Heights, IL 60004 (US); MÜLLER, Uwe, R., Waukegan, IL 60087 (US); BAO, Yijia, P., Vernon Hills, IL 60061 (US)
(74) Representative: Grund, Martin
(86) International application number: PCT/US2004/016656
(87) International publication number: WO 2005/008222

(56) References cited:
- WO-A-99/01766
- WO-A-03/029435
- STORHOFF J J ET AL: "What controls the optical properties of DNA-linked gold nanoparticle assemblies?" JOURNAL OF THE AMERICAN CHEMICAL SOCIETY 17 MAY 2000 UNITED STATES, vol. 122, no. 19, 17 May 2000 (2000-05-17), pages 4640-4650, XP002313770 ISSN: 0002-7863
- NGUYEN THI KIM THANH ET AL: "DEVELOPMENT OF AN AGGREGATION-BASED IMMUNOASSAY FOR ANTI-PROTEIN A USING GOLD NANOPARTICLES" ANALYTICAL CHEMISTRY, AMERICAN CHEMICAL SOCIETY. COLUMBUS, US, vol. 74, no. 7, 1 April 2002 (2002-04-01), pages 1624-1628, XP001115850 ISSN: 0003-2700
- STORHOFF J J ET AL: "One-pot colorimetric differentiation of polynucleotides with single base imperfection using gold nanoparticle probes" JOURNAL OF THE AMERICAN CHEMICAL SOCIETY, AMERICAN CHEMICAL SOCIETY, WASHINGTON, DC, US, vol. 120, 11 March 1998 (1998-03-11), pages 1959-1964, XP002113277 ISSN: 0002-7863
- ELGHANIAN R ET AL: "SELECTIVE COLORIMETRIC DETECTION OF POLYNUCLEOTIDES BASED ON THE DISTANCE-DEPENDENT OPTICAL PROPERTIES OF GOLD NANOPARTICLES" SCIENCE, AMERICAN ASSOCIATION FOR THE ADVANCEMENT OF SCIENCE,, US, vol. 277, 22 August 1997 (1997-08-22), pages 1078-1081, XP002916633 ISSN: 0036-8075
- LIU TAO ET AL: "Sensitivity enhancement of DNA sensors by nanogold surface modification" BIOCHEMICAL AND BIOPHYSICAL RESEARCH COMMUNICATIONS, vol. 295, no. 1, July 2002 (2002-07), pages 14-16, XP002313771 ISSN: 0006-291X
- WANG JOSEPH ET AL: "Particle-based detection of DNA hybridization using electrochemical stripping measurements of an iron tracer." ANALYTICA CHIMICA ACTA, vol. 482, no. 2, 15 April 2003 (2003-04-15), pages 149-155, XP002313772 ISSN: 0003-2670
- CAI HONG ET AL: "Electrochemical detection of DNA hybridization based on silver-enhanced gold nanoparticle label" ANALYTICA CHIMICA ACTA, ELSEVIER, AMSTERDAM, NL, vol. 469, no. 2, 3 October 2002 (2002-10-03), pages 165-172, XP002297770 ISSN: 0003-2670
- MIRKIN C A ET AL: "A DNA based method for rationally assembling nanoparticles into macroscopic materials" NATURE, MACMILLAN JOURNALS LTD. LONDON, GB, vol. 382, 15 August 1996 (1996-08-15), pages 607-609, XP002113276 ISSN: 0028-0836
- OTSUKA H ET AL: "Quantitative and reversible lectin-induced association of gold nanoparticles modified with alpha-lactosyl-omega-mercapto-poly(ethyl ene glycol)" JOURNAL OF THE AMERICAN CHEMICAL SOCIETY, XX, XX, vol. 123, no. 34, 29 August 2001 (2001-08-29), pages 8226-8230, XP002975390 ISSN: 0002-7863

## Description

### FIELD OF THE INVENTION

The present invention relates to specific binding partner interactions, evanescent waveguides and light scattering. More particularly, the present invention relates to a method for detecting one or more specific binding analytes, e.g., nucleic acids or proteins, in the presence of a neutral or anionic polysaccharide, through light scattering techniques, where a change in light scattering caused by the formation of nanoparticle label complexes, within the penetration depth of the evanescent wave of a wave guide, signals the presence of an analyte.

### BACKGROUND OF THE INVENTION

Nucleic acid based analysis has become an increasingly important tool for the diagnosis of genetic and infectious diseases¹⁻³. Assays that utilize target amplification procedures, such as polymerase chain reaction (PCR), in conjunction with fluorescently labeled probes have gained widespread acceptance as the detection method of choice^{4, 5}, but have the drawback of relatively complex and expensive assay and instrumentation configurations. A number of novel labeling and detection methodologies have been developed to circumvent these limitations. For example, signal amplification through enzymatic cleavage of fluorophore labeled probes has enabled detection of specific DNA sequences at sub-attomole levels within complex mixtures⁶. Alternatively, a colorimetric response generated by enzyme catalysis on optically coated silicon substrates has been utilized for high sensitivity nucleic acid detection without instrumentation⁷. Nonetheless, these methods still require complex enzyme-based signal amplification procedures and/or fluorescence readers to achieve sufficient sensitivity. For wide-spread adoption into clinical diagnostics and especially screening procedures there is a clear need for simpler nucleic acid detection that does not rely on enzymatic target or signal amplification to provide for sufficiently high sensitivity and specificity. Furthermore, detection strategies that provide high sensitivity and specific detection of other bioanalytes such as proteins would offer similar advantages in diagnostic applications.

Mirkin and coworkers previously reported a new colorimetric detection method for nucleic acids based on the distance dependent optical properties of DNA-modified gold nanoparticles (DNA-GNP)⁸⁻¹⁰. Making use of the fact that the absorption frequency of the surface plasmon band of metal nanoparticles is dependent on interparticle distance as well as aggregate size, a DNA hybridization mediated aggregation of nanoparticles was shown to result in a red-shift of their surface plasmon band and a visual change of solution color from red to purple or blue. This visible color change could be observed and permanently recorded by spotting a small aliquot (e.g. 1 µL) of the hybridization solution onto a reverse phase TLC plate⁹. More recently this strategy has been extended to the detection of proteins¹¹, carbohydrates¹², and metal ions^{13, 14} using suitably functionalized gold nanoparticles. Because DNA-GNP probes have unique hybridization characteristics, namely sharp melting transitions and raised Tₘ's, this detection method achieved a remarkable sequence specificity that allowed discrimination of single base mismatches, deletions, or insertions¹⁵ ,WO 03/029435 relates to the detection of polynucleotide hybridization. WO 99/ 01766 describes a metal particle, its preparation and use, and a material or device comprising the metal particle. Furthermore, Storhoff et al. disclose a study on the optical properties of DNA-linked gold nanoparticle assemblies (J. Am. Chem. Soc. 2000, 122, p. 4640-4650).]₁,.

Though the simplicity of spotting the sample followed by visual readout is extremely attractive for diagnostic applications, the relatively low limit of detection (LOD) of 10 fmol target⁹ has limited its utility to date. Two factors that contribute to the low sensitivity are the inability to detect nanoparticles at lower concentrations, and the requirement of a larger aggregate to achieve a detectable colorimetric shift. Experimental data and optical modeling of the DNA-linked gold nanoparticle structures has demonstrated that a large number (e.g. hundreds to thousands) of 15 nm diameter gold particles are needed to provide a measurable red-shift in the surface plasmon band^{10, 16}. Experimentally, this necessitates a molar excess of target over nanoparticles to promote formation of large aggregates¹⁰. Efforts to increase sensitivity have focused on using 50-100 nm diameter gold particles which absorb more light than the 15 nm diameter particles. However, pre- and post-test (aggregation) colors were not easily distinguishable by a visual readout after spotting¹⁷. Furthermore, using hybridization conditions well known in the art for nucleic acid detection, gold nanoparticle probe complexes are not formed with more complex nucleic acid samples such as PCR amplicons, which are double stranded. Snap freezing the sample accelerates the formation of probe-target complexes with short PCR amplicons (<150 base-pairs). However, freezing is not amenable to automation and promotes mismatch formation at the lower temperature, and therefore, it is not suitable for more complex target analyte samples such as PCR amplicons with high GC content, protein-based reactions where continuous freeze-thaw reactions may damage the protein or antibody, or for genomic DNA samples where a large number of non-target sequences are present.

### SUMMARY OF THE INVENTION

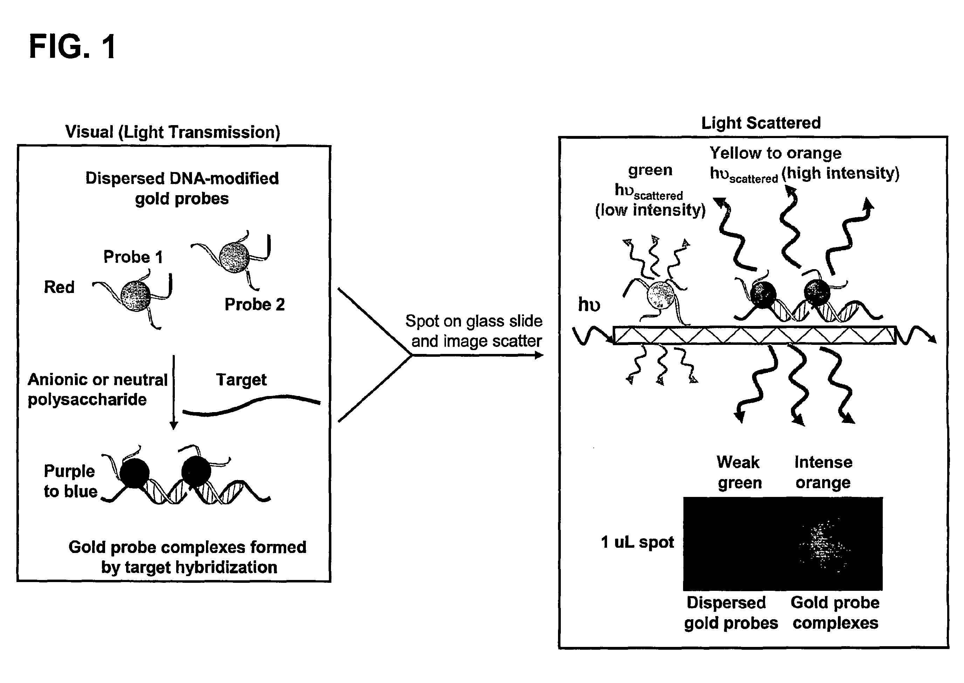

The method is as defined in the appended claims. A method for detection of specific binding analytes based on analyte mediated formation of metallic nanoparticle-labeled probe complexes, e.g., gold nanoparticle probe complexes, that results in a change in the color and/or intensity of light scattered, which can be measured by placing a small amount of the sample onto a waveguide and detecting the light scattered visually or with a photosensor is disclosed. A schematic illustration of this detection method applied to nucleic acid detection is shown in Figure 1. The nanoparticle probe complexes comprise two or more probes bound to a specific target analyte.

Methods of homogeneous detection of target nucleic acid sequences in a sample without enzymatic target or signal amplification are disclosed. In one aspect, the method comprises contacting a target nucleic acid sequence in the sample with at least one detector probe and observing a detectable change, wherein the sample comprises nucleic acid molecules of higher biological complexity relative to amplified nucleic acid molecules.

In one aspect, probe complexes comprise at least one type of nanoparticle probe bound to more than one region, e.g., a repeated region, of the specific target, e.g., a DNA molecule. In a particular aspect, the nanoparticle probes can have at least one type of specific binding member bound thereto, e.g., an oligonucleotide, that is complementary to a repeated region of a target, e.g., DNA. In another aspect, the nanoparticle probes can have two or more specific binding members bound thereto that are complementary to different portions of a target. In another aspect of the invention, the probe complexes comprise at least two types of nanoparticle probes bound to more than one region, e.g., a repeated region, of the specific target, e.g., a DNA molecule. Each type of nanoparticle probes can have at least one type of specific binding member, e.g., an oligonucleotide, that binds to at least one region of the specific target, e.g., a DNA molecule.

The scatter-based colorimetric detection methods provide much higher sensitivity (> 4 orders of magnitude) in nucleic acid detection than the previously reported absorbance-based spot test when coupled to an improved hybridization method based on neutral or anionic polysaccharides that enables probe-target binding at low target concentrations. Moreover, the methods enable the detection of aggregates in the presence of a significant excess of non-aggregated particles, which drives hybridization in the presence of low target concentrations. Also, dextran sulfate mediated probe-target complex formation in conjunction with evanescent induced scatter as provided herein enables a simple homogeneous hybridization and colorimetric detection protocol for nucleic acid sequences in total bacterial DNA, or with antibody-antigen interactions.

### DESCRIPTION OF THE FIGURES

FIG. **1****:** Detection of gold probe complexes by evanescent illumination and scatter detection in the presence of neutral or anionic polysaccharides.

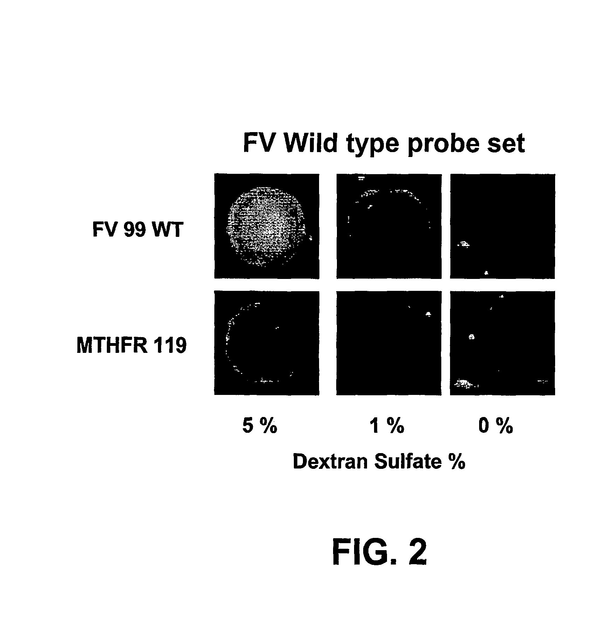

FIG. **2****:** Detection of a Factor V Leiden gene sequence using 40 nm gold particle probes (SEQ ID NO: 4 and 6) and scatter-based detection using different concentrations of dextran sulfate. A PCR-amplified 99 base-pair fragment (SEQ ID NO: 10) was used as a positive hybridization control, and an MTHFR 119 base-pair fragment (SEQ ID NO: 7) was used as a negative control. The dextran sulfate concentration was varied from 0 - 5 % for detection.

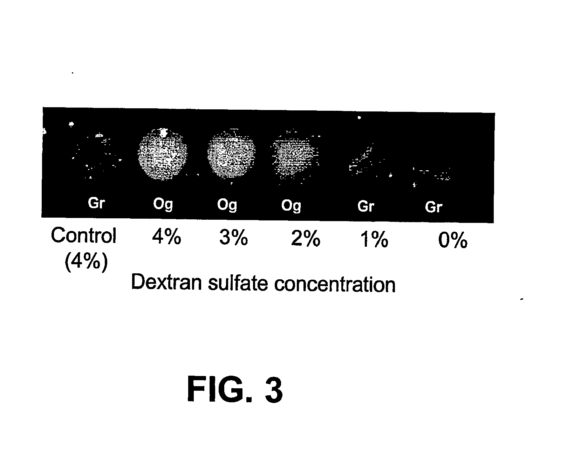

FIG. **3****:** Detection of a mecA gene PCR product (1.3 x 10⁹ copies/µL) with 40 nm diameter gold probes (SEQ ID NO: 11 and 12) at various concentrations of dextran sulfate. A no target control was used for comparison. Color CMOS image of a 1 µL sample aliquot spotted onto a glass slide is shown.

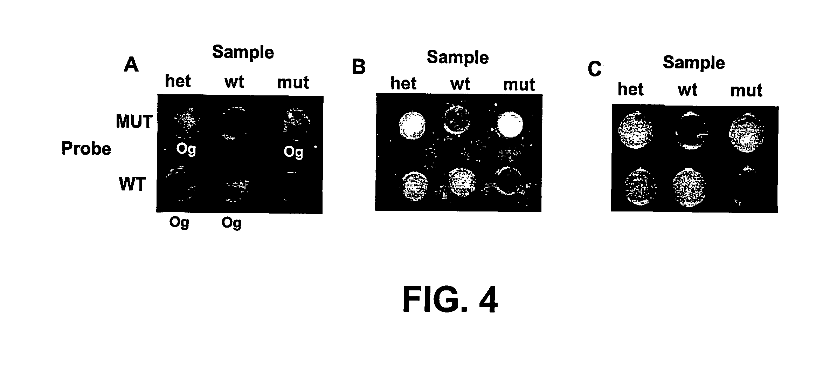

FIG. **4****:** I1307K genotyping using 30 nm gold particle probes. PCR-amplified 78 base-pair fragments of wild-type (wt), mutant (mut), or heterozygous (het) genotypes were tested with wild-type (WT) and mutant (MUT) APC gene probes. (A) Images taken with color CMOS after white light illumination. Og = orange. (B) Images taken with black and white CMOS after white light illumination (NIS 2000a). (C) Images taken with black and white CMOS after illumination with a red light emitting diode (LED).

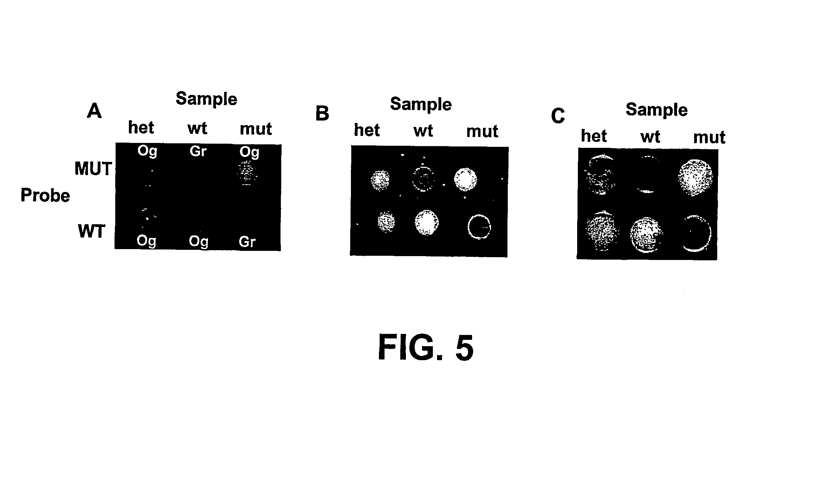

FIG. **5****:** I1307K genotyping using 40 nm gold particle probes. PCR-amplified 78 base-pair fragments of wild-type (wt), mutant (mut), or heterozygous (het) genotypes were tested with wild-type (WT) and mutant (MUT) APC gene probes. (A) Images taken with color CMOS after white light illumination. Og = orange, Gr = green. (B) Images taken with black and white CMOS after white light illumination (NIS 2000a). (C) Images taken with black and white CMOS after illumination with red LED.

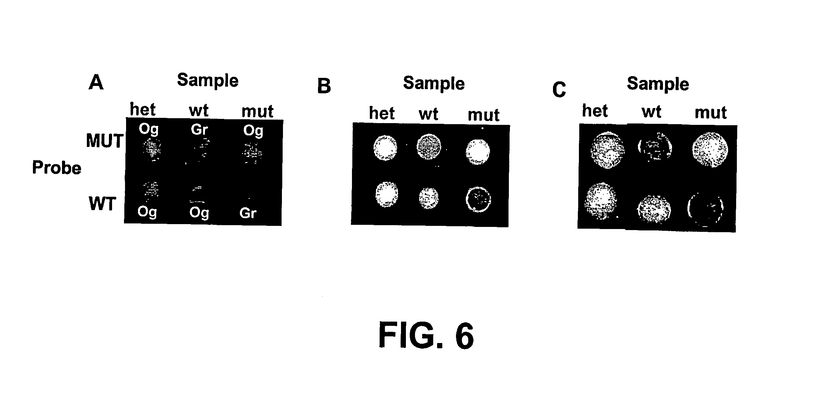

FIG. **6****:** I1307K genotyping using 50 nm gold particle probes. PCR-amplified 78 base-pair fragments of wild-type (wt), mutant (mut), or heterozygous (het) genotypes were tested with wild-type (WT) and mutant (MUT) APC gene probes. (A) Images taken with color CMOS after white light illumination. Og = orange, Gr = green. (B) Images taken with black and white CMOS after white light illumination (NIS 2000a). (C) Images taken with black and white CMOS after illumination with red LED.

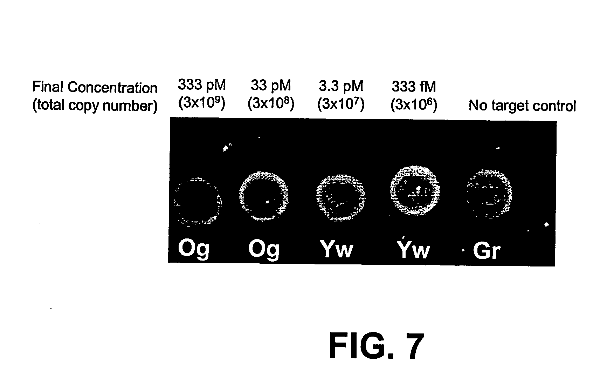

FIG. **7****:** Detection of a mecA gene sequence (SEQ ID NO: 13) with 50 nm gold probes (SEQ ID NO: 11 and 12). A 1 ul sample aliquot was dried onto the slide for imaging. Og = orange. Yw = yellow. Gr = green.

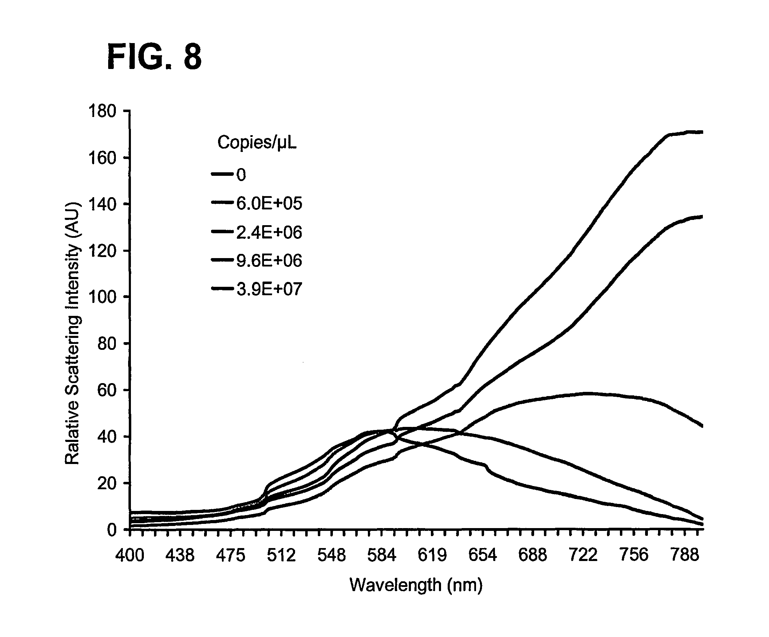

FIG. **8****:** Analysis of gold probe - target complexes using a diode array detector. A 1 ul sample aliquot was dried onto a glass slide, and the evanescent induced scatter from each sample was analyzed using a diode array detector.

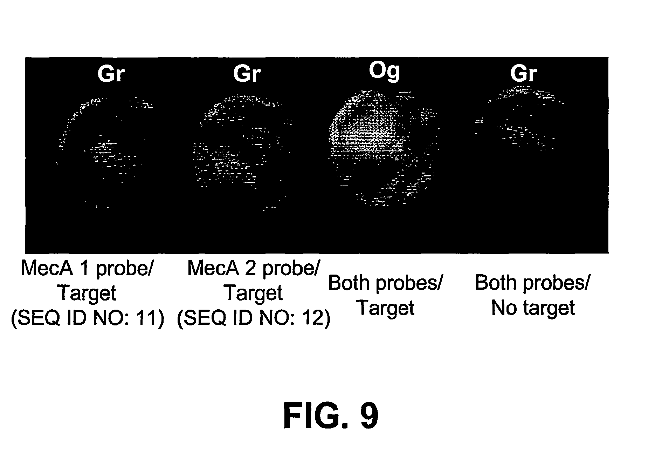

FIG. **9****:** A mecA gene sequence (SEQ ID NO: 13) challenged with a single complementary gold probe (SEQ ID NO: 11 or 12) or two complementary gold probes (SEQ ID NO: 11 and 12). A solution with both probes in the absence of target served as a negative hybridization control. Og = orange. Gr = green.

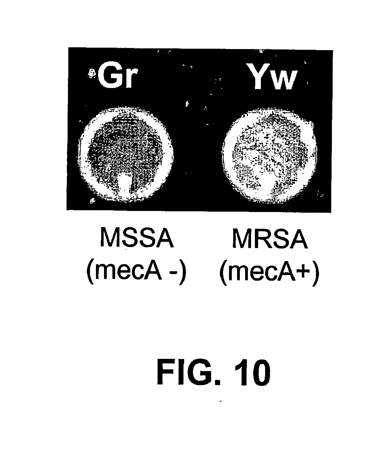

FIG. **10****.** Gene-specific detection of methicillin resistance (*mecA*) from unamplified genomic DNA samples of Methicillin-resistant *Staph. aureus* (MRSA). Methicillin-sensitive *Staph. aureus* (MSSA) was used as a negative control. A 1uL sample aliquot was spotted on the glass slide for both visual and color CMOS imaging. Gr = green, Yw = Yellow.

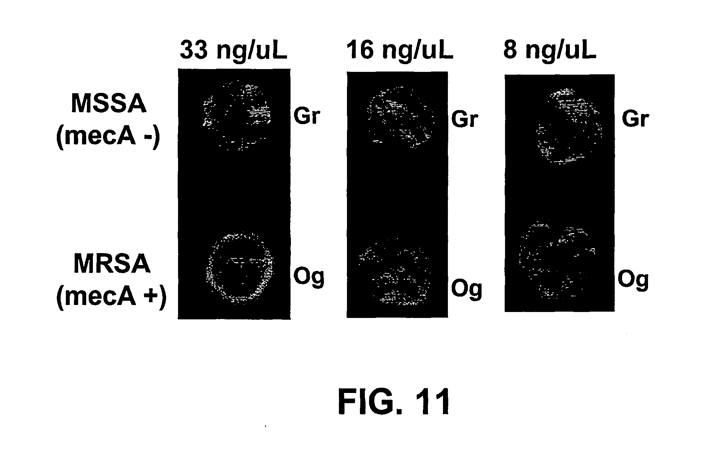

FIG. **11****.** Gene-specific detection of methicillin resistance (mecA) from unamplified genomic DNA samples of Methicillin resistant *Staph*. *aureus* (MRSA) and Methicillin susceptible *Staph. aureus* (MSSA). A 1uL aliquot was dried onto the slide for imaging. Gr = green, Og = Orange.

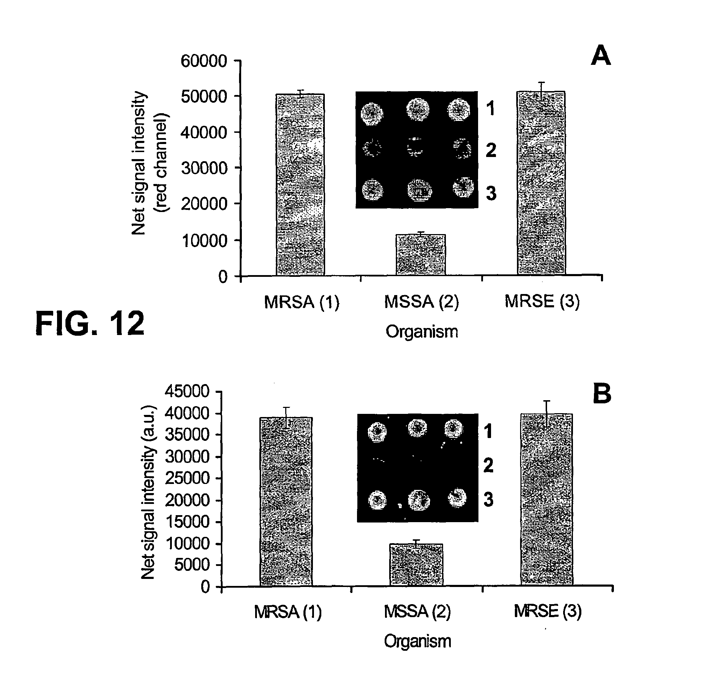

FIG. **12****.** Colorimetric analysis using optical instrumentation. Methicillin resistant *S*. *aureus* (MRSA), *S. epidermidis* (MRSE), and methicillin sensitive *S. aureus* (MSSA) genomic DNA samples were tested using 40 nm gold probes. **(a)** The net signal intensity from the red channel of the color CMOS image (inset) is plotted for each sample. Three replicates were performed for each sample. The error bar represents the standard deviation in signal intensity. In the captured image, colorimetric scatter from all spots in row 1 (MRSA) is orange, row 2 (MSSA) is green, and row 3 (MRSE) is orange. (b) The glass slide is excited with a red LED, and the image is captured with a monochrome photosensor. The inset shows the captured image in this detection configuration.

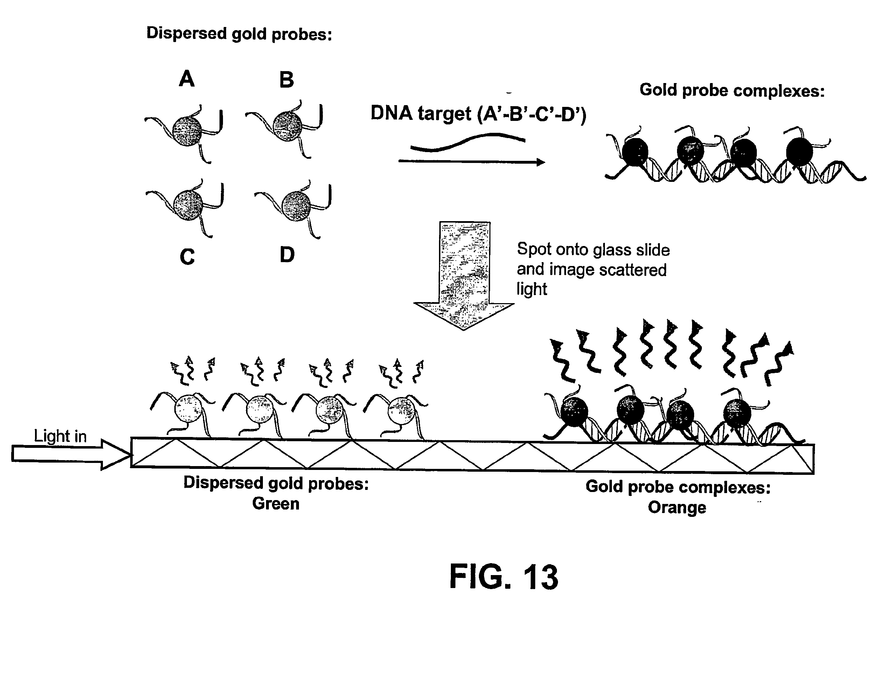

FIG. **13****.** Schematic illustrating detection of target analyte using four gold probes per target.

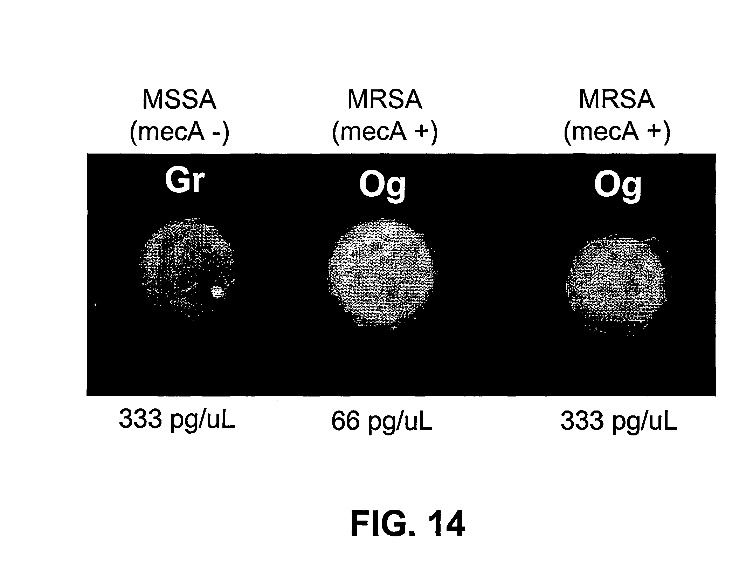

FIG. **14****.** Highly sensitive gene-specific detection of methicillin Resistance (*mecA*) from unamplified genomic DNA samples of Methicillin resistant *Staph. aureus* (MRSA) using four 50 nm diameter gold probes. Methicllin susceptible *Staph. aureus* (MSSA) served as a negative control. A 1uL aliquot was dried on the slide for imaging. Gr = green, Og = Orange.

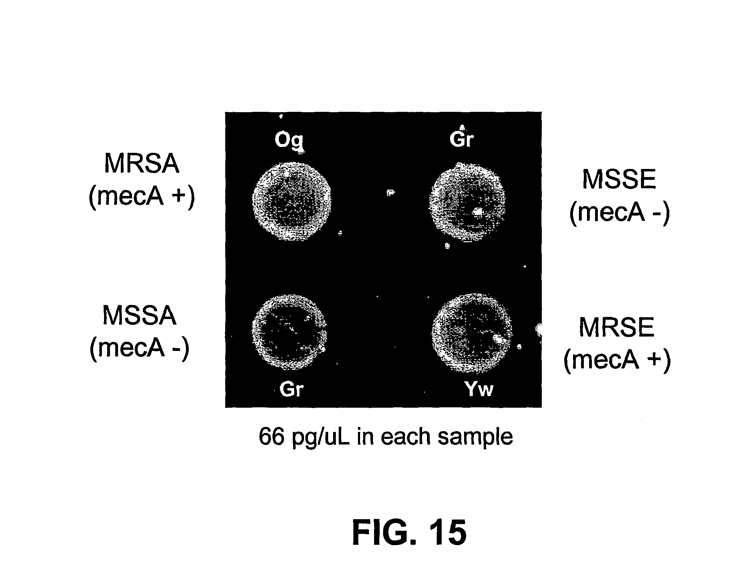

FIG. **15****.** Highly sensitive gene-specific detection of methicillin resistance (mecA) from unamplified genomic DNA samples using four 50 nm diameter gold probes. A 1uL aliquot was dried on the slide for imaging. MRSA = Methicillin-Resistant *Staph. aureus,* MSSA = Methicillin-Sensitive *Staph. aureus,* MRSE = Methicillin-Resistant *Staph. epidermidis*, MSSE = Methicillin Susceptible *Staph. epidermidis*, Gr = green, Og = Orange, Yw = Yellow.

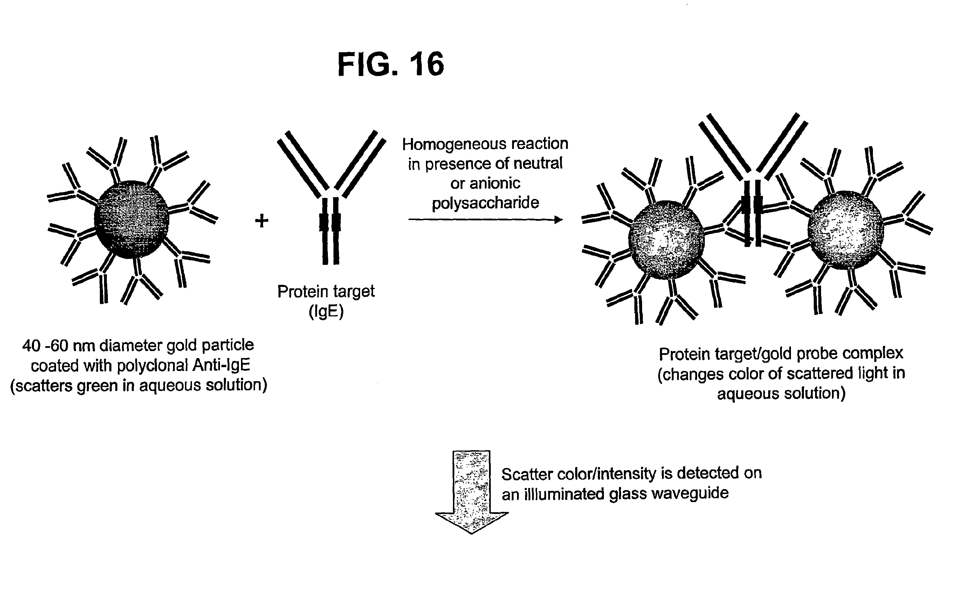

FIG. **16****:** Schematic of change in scatter color produced by binding of antibody coated gold particles to a protein target. IgE antibody target is shown as an example.

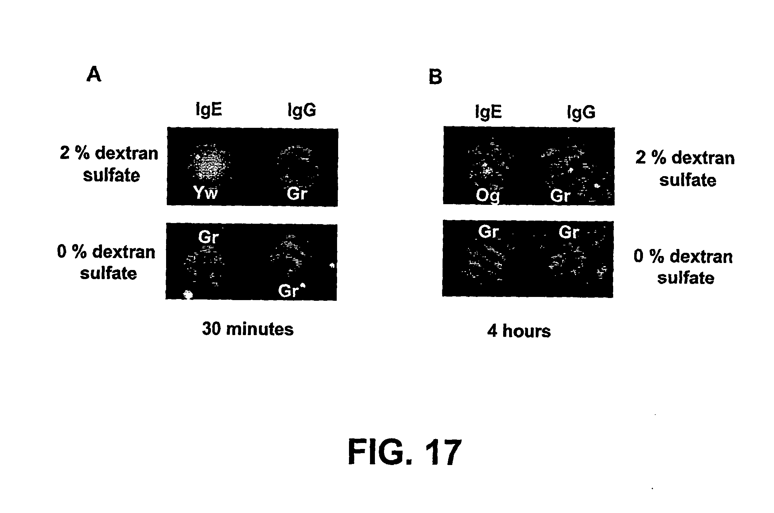

FIG. **17****:** Detection of IgE target using anti-IgB coated 50 nm gold probes in conjunction with dextran sulfate to promote probe-target complex formation. The scatter color from IgE target samples was compared to IgG control samples with and without dextran sulfate The images were recorded with a color CMOS photosensor after evanescent illumination with white light It should be noted that the scatter color from the spotted samples is also detectable visually with the naked eye. The observed scatter colors are denoted by letters where Og = orange, Gr = green, Yw = yellow.

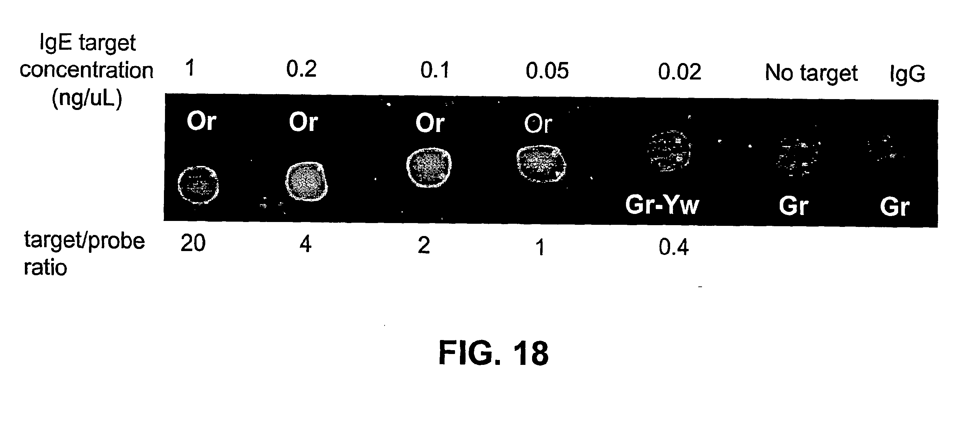

FIG. **18****:** Evanescent illumination and scatter-based detection of IgE target using anti-IgE coated 40 nm gold probes. The scatter color from a serial dilution of target was compared to control samples containing either no target or IgG. The IgE target concentration is shown above the figure, and the target/probe ratio is shown below the image. The images were recorded with a color CMOS photosensor. It should be noted that the scatter color from the spots is also detectable visually with the naked eye. The observed scatter colors are denoted by letters where Og = orange, Gr = green, Yw-Gr = yellowish green.

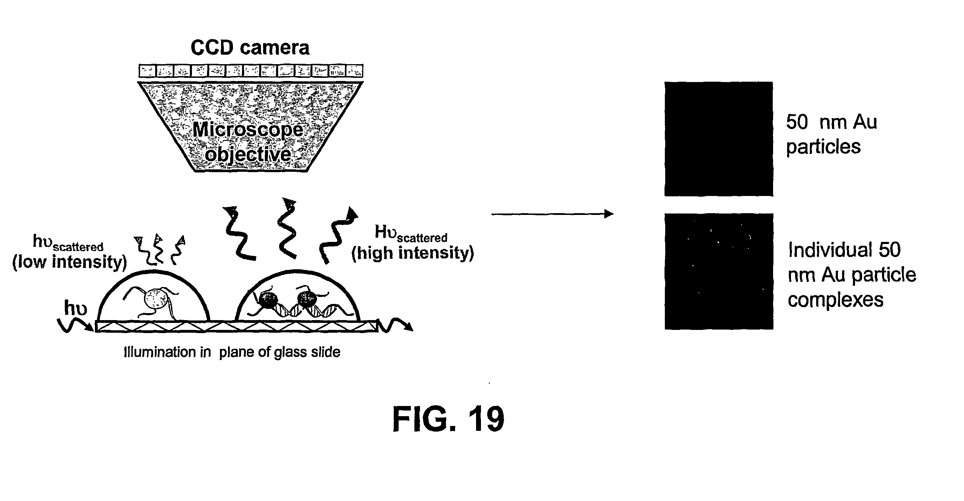

FIG. **19****:** Detection of evanescent-induced scatter from individual probe complexes spotted on a glass waveguide using high resolution optics.

### DETAILED DESCRIPTION OF THE INVENTION

Methods of detecting for the presence or absence of a target analyte having at least two portions are disclosed. In a particular aspect, the method comprises the steps of: (a) providing a type of metal nanoparticle having a specific binding complement of a target analyte attached thereto, the specific binding complement being capable of recognizing two different segments of the target analyte; (b) forming a light scattering complex by contacting a sample believed to contain the specific binding complement with the nanoparticle and with a polysaccharide, preferably a neutral or anionic polysaccharide, under conditions effective to allow binding of the specific binding complement to two or more portions of the target analyte; (c) illuminating the light scattering complex under conditions effective to produce scattered light from said complex; and (d) detecting the light scattered by said complex as a measure of the presence of the target analyte.

In another aspect, a method comprises the steps of: (a) providing at least two types of metal nanoparticles having specific binding complement of a target analyte attached thereto, the specific binding complement on each type of nanoparticles being capable of recognizing different portions of the target analyte; (b) forming a light scattering complex by contacting the target analyte with at least two types of metal nanoparticles having specific binding complements attached thereto and with a polysaccharide, preferably a neutral or anionic polysaccharide, the contacting taking place under conditions sufficient to enable binding of the specific binding complements to the target analyte; and (c) illuminating the light scattering complex under conditions effective to produce scattered light from said complex; and (d) detecting the light scattered by said complex as a measure of the presence of the target analyte.

The illumination step may comprise placing at least a portion of the light scattering complex within an evanescent wave of a waveguide. The detecting step aspect comprise observing the color of scattered light from the light scattering complex and/or observing the intensity of scattered light from the light scattering complex.

A target analyte and specific binding complement can be complements of a specific binding pair. A specific binding pair can include, but is not limited to, a nucleic acid, a oligonucleotide, a polypeptide, an antibody, an antigen, a carbohydrate, a peptide nucleic acid, a protein, a peptide, an amino acid, a hormone, a steroid, a vitamin, a drug, a virus, a polysaccharide, a lipids, lipopolysaccharides, glycoproteins, lipoproteins, nucleoproteins, oligonucleotides, antibodies, immunoglobulins, albumin, hemoglobin, coagulation factors, peptide and protein hormones, non-peptide hormones, interleukins, interferons, cytokines, peptides comprising a tumor-specific epitope, cells, cell-surface molecules, microorganisms, fragments, portions, components or products of microorganisms, small organic molecules, nucleic acids and oligonucleotides, metabolites of or antibodies to any of the above substances.

In one aspect, nucleic acids and oligonucleotides can be genes, viral RNA and DNA, bacterial DNA, fungal DNA, mammalian DNA, cDNA, mRNA, RNA and DNA fragments, synthetic oligonucleotides, modified oligonucleotides, single-stranded and double-stranded nucleic acids, natural and synthetic nucleic acids, or aptamers.

As used herein, a "target analyte" is any molecule or compound to be detected. Non-limiting examples of analytes include a nucleic acid, a oligonucleotide, a polypeptide, an antibody, an antigen, a carbohydrate, a protein, peptide nucleic acid, a peptide, an amino acid, a hormone, a steroid, a vitamin, a drug, a virus, a polysaccharide, a lipids, lipopolysaccharides, glycoproteins, lipoproteins, nucleoproteins, oligonucleotides, antibodies, immunoglobulins, albumin, hemoglobin, coagulation factors, peptide and protein hormones, non-peptide hormones, interleukins, interferons, cytokines, peptides comprising a tumor-specific epitope, cells, cell-surface molecules, microorganisms, fragments, portions, components or products of microorganisms, small organic molecules, nucleic acids and oligonucleotides, and metabolites of or antibodies to any of the above substances.

A target analyte may be a nucleic acid and the specific binding complement may be an oligonucleotide. In another aspect, the target analyte is a protein or antibody and the specific binding complement is an antibody. In still another aspect, the target analyte is a protein or antibody and the specific binding complement is a polyclonal or monoclonal antibody.

In still another aspect, a target analyte is a gene sequence from a genomic DNA sample and the specific binding complements are oligonucleotides, the oligonucleotides having a sequence that is complementary to at least a portion of the gene sequence.

Methods of homogeneous detection of target nucleic acid sequences in a sample are disclosed. In one aspect, the method comprises contacting a target nucleic acid sequence in the sample with at least one detector probe and observing a detectable change, wherein the sample comprises nucleic acid molecules of higher biological complexity relative to amplified nucleic acid molecules. Thus, the target nucleic acid sequence can be detected without enzymatic target or signal amplification. As used herein, "homogeneous detection" refers to a detection format wherein an analyte is detected by a detector probe without separating out the probe analyte complex from unbound probe.

Non-limiting examples of "enzymatic target amplification" include polymerase chain reaction (PCR), transcription mediated amplification (TMA), ligase chain reaction (LCR), and Isothermal and Chimeric Primer-Initiated Amplification of Nucleic Acid (ICAN^{™}) (Takara Bio Inc, Japan).

A non-limiting example of "enzymatic signal amplification" include enzymatic catalysis of fluorophore labeled probes for detection of specific DNA sequences at sub-attomole levels within complex mixtures as described, for example in Hall et al., 2000, Proc. Nat. Acad. Sci. USA 97, 8272-8277.

A target nucleic acid sequence can be a gene, viral RNA, viral DNA, bacterial DNA, fungal DNA, mammalian DNA, mammalian cDNA, mammalian mRNA, an oligonucleotide, or an aptamer. Preferably, the target nucleic acid sequence is DNA. In other aspects, the sample can comprise genomic DNA, genomic RNA, expressed RNA, plasmid DNA, mitochondrial or other cell organelle DNA, free cellular DNA, viral DNA or viral RNA, or a mixture of two or more of the above.

A "sample" as used herein refers to any quantity of a substance that comprises an analyte and that can be used in a method. For example, the sample can be a biological sample or can be extracted from a biological sample derived from humans, animals, plants, fungi, yeast, bacteria, viruses, tissue cultures or viral cultures, or a combination of the above. They may contain or be extracted from solid tissues (e.g. bone marrow, lymph nodes, brain, skin), body fluids (e.g. serum, blood, urine, sputum, seminal or lymph fluids), skeletal tissues, or individual cells. Alternatively, the sample can comprise purified or partially purified nucleic acid molecules and, for example, buffers and/or reagents that are used to generate appropriate conditions for successfully performing a method.

In a particular aspect, nucleic acid molecules in a sample are of higher biological complexity than amplified nucleic acid molecules. One of skill in the art can readily determine the biological complexity of a target nucleic acid sequence using methods as described, for example, in Lewin, GENE EXPRESSION 2, Second Edition: Eukaryotic Chromosomes, 1980, John Wiley & Sons, New York .

Hybridization kinetics are absolutely dependent on the concentration of the reaction partners, i.e. the strands that have to hybridize. In a given quantity of DNA that has been extracted from a cell sample, the amount of total genomic, mitochondrial (if present), and extra-chromosomal elements (if present) DNA is only a few micrograms. Thus, the actual concentrations of the reaction partners that are to hybridize will depend on the size of these reaction partners and the complexity of the extracted DNA. For example, a target sequence of 30 bases that is present in one copy per single genome is present in different concentrations when comparing samples of DNA from different sources and with different complexities. For example, the concentration of the same target sequence in 1 microgram of total human DNA is about 1000 fold lower than in a 1 microgram bacterial DNA sample, and it would be about 1,000,000 fold lower than in a sample consisting in 1 microgram of a small plasmid DNA.

The high complexity (1X10⁹ nucleotides) of the human genome demands an extraordinary high degree of specificity because of redundancies and similar sequences in genomic DNA. For example, to differentiate a nucleic acid sequence with 25meric oligonuclotides from the whole human genome requires a degree of specificity with discrimination ability of 40,000,000:1. In addition, since the wild type and mutant targets differ only by one base in 25mer capture sequence, it requires distinguishing two targets with 96% homology for successful genotyping. The methods of the invention surprisingly and unexpectedly provide efficient, specific and sensitive homogeneous detection of a target nucleic acid molecule having high complexity compared with amplified nucleic acid molecules.

The biological complexity of target nucleic acid molecules in a sample derived from human tissues is on the order of 1,000,000,000, but may be up to 10 fold higher or lower for genomes from plants or animals. Preferably, the biological complexity of a sample is about 50,000 to 5,000,000,000. More preferabley, the biological complexity is about 1,000,000 - 6,000,000. Most preferably, the biological complexity is about 1,000,000,000.

A detector probe may be a nanoparticle, preferably a metallic nanoparticle and more preferably a gold nanoparticle, bound to one or more oligonucleotides that have a sequence that is complementary to at least part of the target nucleic acid sequence.

A homogeneous detection method may comprise contacting a target nucleic acid with one or more detector probes in the presence of a neutral or anionic polysaccharide, preferably an anionic polysaccharide, more preferably dextran sulfate, thereby forming a light scattering complex, and wherein the light scattering complex is illuminated under conditions effective to produce scattered light from said complex, from which the presence of the target nucleic acid sequence can be detected. The detection probes may be nanoparticles, preferably metallic nanoparticles and more preferably gold nanoparticles, each bound to an oligonucleotide having a sequence that is complementary to a different portion of the target nucleic acid sequence. Scattered light can be detected as described herein to detect the presence of the target nucleic acid sequence.

The methods may involve detecting a change in the scattering of light directed into a waveguide, the change in scattering being the result of the formation of analyte mediated nanoparticle probe complexes in the presence of a neutral or anionic polysaccharide, which are formed on a waveguide surface, or formed in solution and spotted onto the surface, such that at least a portion of the sample is within the penetration depth of an evanescent wave. A waveguide refers to a two dimensional total internal reflection (TIR) element that provides an interface capable of internal reference at multiple points, thereby creating an evanescent wave that is substantially uniform across all or nearly the entire surface. The two dimensional waveguide can be planar or curve linear and can assume the shape of a cuvette, a rod or a plate. The waveguide can be comprised of transparent material such as glass, quartz, plastics such as polycarbonate, acrylic, or polystyrene. Preferably, the waveguide is a planar waveguide, for example, a glass slide.

The formation of nanoparticle probe complexes in a method can occur in solution by the specific binding interaction of two or more nanoparticle labels to a target analyte (or alternatively one nanoparticle binding at multiple sites on a single target) in the presence of a neutral or anionic polysaccharide. A waveguide can be contacted with the solution so that a change in scatter due to formation of nanoparticle probe complexes can be measured. When the nanoparticle probe complexes are comprised of metal nanoparticle probes, changes in the surface plasmon band frequency and intensity may be measured in the form of color and intensity of scattered light In one embodiment of the invention, the sample can be placed within the penetration depth of an evanescent field (e.g. spotted from solution), and the light scattering from the sample can be measured without the need of capture probes. Alternatively, the sample can be spotted onto the waveguide and subsequently dried. This procedure can enhance detection sensitivity and provide a permanent test record.

The glass or other types of surfaces used for waveguides can be modified with any of a variety of functional groups (e.g. -COOH, -NH₂, -OH, etc.), including specific binding members such as haptens or oligonucleotide sequences. In this embodiment, a neutral or anionic polysaccharide (e.g. dextran sulfate) enables binding of one or more suitably functionalized metal nanoparticles to adjacent regions of a target analyte in a homogeneous format. An example is the binding of two DNA-modified metallic nanoparticles to adjacent regions of a complementary nucleic acid sequence (e.g. PCR amplicon) in solution.

As described herein, in experiments with PCR amplicons or genomic DNA, > 2% v/v dextran sulfate (average molecular weight of 500,000) enabled binding of two or more DNA-modified gold probes to a complementary target sequence leading to a detectable change in colorimetric scatter when samples were spotted onto an illuminated glass waveguide. Using 2 - 5% v/v dextran sulfate exhibited similar detectable changes in colorimetric scatter for target analytes, while less than 2% v/v dextran sulfate did not result in a change in colorimetric scatter. In addition to double stranded nucleic acids, > 2% v/v dextran sulfate (average molecular weight of 500,000) enables binding of polyclonal antibody coated gold probes to a protein-based target leading to a detectable change in colorimetric scatter when samples are spotted onto an illuminated glass waveguide.

Thus, in one aspect 0.1 - 10 % v/v of a a neutral or anionic polysaccharide, such as the anionic polysaccharide dextran sulfate having an average molecular weight of 500,000, can be used to promote the formation of probe-target complexes is. Preferably, 2 - 5% v/v of a neutral or anionic polysaccharide, such as the anionic polysaccharide dextran sulfate with an average molecular weight of 500,000, is used for probe-target binding. Alternatively, more than 10 % neutral or anionic polysaccharide, such as the anionic polysaccharide dextran sulfate, can be used in the methods .

The average molecular weight range of dextran sulfate used in the Examples described below was ∼ 500,000. However, dextran sulfate and derivatives thereof can be produced at a variety of molecular weights. At the top end, the average molecular weight exceeds 1 million. On the other end, molecular weights of dextran sulfate can be less than 100,000. A preferred molecular weight range for the methods of the invention is between 80,000 and 650,000. The most preferred molecular weight range is 400,000 - 650,000 with an average molecular weight of 500,000.

Dextran sulfate sodium salt is a polyanionic derivative of dextran. It has been demonstrated previously that both neutral and anionic dextran polymers accelerate DNA renaturation (Wetmur et. al, Biopolymers, 14 (1975), 2517). Therefore, both neutral and polyanionic polysaccharides can be used in the methods of the invention to enable probe - target analyte complex formation. Furthermore, natural mucopolysaccharides (e.g. chondroitin sulfate and dermatan sulfate) are similar in chemical composition and can also be used in methods of the invention to enable probe - target analyte complex formation. In addition, other natural or synthetic polymers that are neutral, anionic, or cationic, or a mixture thereof, also can be used in the methods of the invention. A non-limiting example is CTAB (cetyltrimethylammonium bromide), which also has been shown to accelerate DNA renaturation rates.

In one aspect, metallic nanoparticles are employed as the light-scattering label in a method of the invention. Such labels cause incident light to be scattered elastically, i.e. substantially without absorbing light energy. Suitable but non-limiting nanoparticles and methods for preparing such nanoparticles are described in U.S. Patent No. 6,506,564, issued Jan. 14, 2003; USSN 2003/0022169, filed March 28, 2001; USSN 2003/0087242, filed Dec. 7,2001; USSN 2003/0113740, filed April 18, 2002; USSN 2002/0177143, filed Dec. 28, 2001; WO0173123, filed March 28, 2001; WO02046472, filed 12/7/01; and WO03008539, filed May 22, 2002,.

Metal nanoparticles > 30 nm diameter are preferred for homogenous detection of probe-target analyte complexes on an illuminated waveguide. Metal nanoparticles > 30 nm diameter are known to scatter light with high efficiency, where the scattering intensity scales with the sixth power of the radius for individual particles. Further, the surface plasmon band frequency of metal nanoparticles, which leads to the absorbance and scattering of specific wavelengths of light, is dependent on particle size, chemical composition, particle shape, and the surrounding medium, such that a decrease in interparticle distance between two or more metal nanoparticles results in changes in the surface plasmon band frequency and intensity. For example, when two metal nanoparticle particles with specific binding members bind to adjacent regions of a target analyte, a change in the surface plasmon band frequency occurs leading to a change in solution color. Metal nanoparticles in the size range of 40 - 80 nm diameter are most preferred since monodisperse particles (< 15% CV) can be synthesized, and the changes in the color and intensity of scattered light can be monitored visually or with optical detection instrumentation on an illuminated waveguide. A variety of metal nanoparticle compositions also could be used in the reported invention including gold, silver, copper, and other metal particles well known in the art or alloy or core-shell particles. For example, a core-shell particle can be a nanoparticle having a metal or non-metal (e.g. silica or polystyrene) core coated with a shell of metal. Such core-shell particles are described, for example, in Halas et al., 1999, Applied Physics Letters 75:2197-99 and Halas et al., 2001, J of Phys Chem. B 105:2743.

In one aspect, other types of metal nanostructures that have a surface plasmon band can be used in the methods. The most preferred particle composition is gold since it is highly stable and can be derivatized with a variety of biomolecules. The most preferred particle and size range is 40 - 80 nm diameter gold particles.

When using dextran sulfate to drive the formation of nanoparticle probe-target analyte complexes, the preferred detection embodiment is an illuminated waveguide, which enables the monitoring of scattered light from the complexes within the penetration depth of the evanescent field. In addition to high detection efficiency associated with monitoring nanoparticle scatter, which is well known in the art, the formation of metal nanoparticle probe-target complexes not only leads to a shift in color, but also provides a substantial increase in the intensity of light scattered when compared to an uncomplexed metal nanoparticle probe.

Unlike previously reported systems, this enables homogeneous detection of target analytes in the presence of an excess of nanoparticle probes. An example is two 50 nm gold probes bound to a DNA target, where a visually detectable color change is observed on the waveguide in the presence of up to 20 fold excess of unbound gold nanoparticle probes after the sample is dried onto the waveguide (note that the sample may not be fully dried as dextran sulfate retains some moisture under some conditions), without removing the excess unbound gold nanoparticle (i.e. homogeneous reaction). As a result, homogeneous detection of target analyte can be driven with an excess of nanoparticle probe, and in conjunction with dextran sulfate enables femtomolar concentrations of target analyte (e.g. specific genomic DNA sequences) to be detected with picomolar concentrations of 50 nm diameter gold probe.

In addition, the detectable probe/target ratio can be increased substantially by using more than two probes that bind to a target analyte. By binding four 50 nm gold probes to adjacent regions of a DNA target in the homogeneous assay, over 200 fold excess of gold nanoparticle probe can be used in the methods, and a change in colorimetric scatter is still detectable on an illuminated waveguide. By using an excess of probe to target, significantly lower concentrations of target analyte can be detected with the methods either visually or with optical detection instrumentation.

The Examples described herein demonstrate use of either two probes or four probes complexed to a target analyte. In one aspect, a larger number of probes can be used in methods to bind to a target analyte to achieve even greater detection sensitivities and larger probe/target ratios. In another aspect, intermediate oligonucleotides which contain a sequence portion complementary to the target analyte, and a second sequence portion complementary to a probe, may be bound to the target analyte, followed by binding of the nanoparticle probe. By designing intermediate oligonucleotides that bind to different portions of a target analyte but have a common recognition sequence for a nanoparticle, two or more nanoparticle probes can be bound to a target analyte using a single nanoparticle probe with multiple intermediate oligonucleotides.

Non-evanescent scatter-based detection methods well known in the art are compatible with the methods for forming metal nanoparticle probe complexes in the presence of neutral or anionic polysaccharides. Other methods such as light absorbance, light transmission, light reflectance, surface enhance raman scattering, electrical, as well as other detection methods well known in the art for detecting nanoparticle probe complexes also can be used.

In another aspect the waveguide includes at least one or more discrete regions that contain the same or different specific binding members or capture probes attached thereto to immobilize one or more different target analytes. Preferably the discrete region is in the form of a small dot or spot Other sizes and configurations are possible and are within the scope of the invention. Alternatively, the waveguide may include a plurality of arrayed discrete regions to target different portions of a single analyte or multiple different analytes.

As defined here, the "specific binding member" means either member of a cognate binding pair. A "cognate binding pair, " as defined herein, is any ligand-receptor combination that will specifically bind to one another, generally through non-covalent interactions such as ionic attractions, hydrogen bonding, Vanderwaals forces, hydrophobic interactions and the like. Exemplary cognate pairs and interactions are well known in the art and include, by way of example and not limitation: immunological interactions between an antibody or Fab fragment and its antigen, hapten or epitope; biochemical interactions between a protein (e.g. hormone or enzyme) and its receptor (for example, avidin or streptavidin and biotin), or between a carbohydrate and a lectin; chemical interactions, such as between a metal and a chelating agent; and nucleic acid base pairing between complementary nucleic acid strands; a peptide nucleic acid analog which forms a cognate binding pair with nucleic acids or other PNAs. Nucleic acid will be understood to include 2'-deoxyribonucleic acid (DNA) as well as ribonucleic acid (RNA) when stability permits. Preparation of antibody and oligonucleotide specific binding members is well known in the art.

The analyte-probe complexes can be observed directly on a waveguide without specific attachment (e.g. no interaction with the surface, ionic interaction with the surface, or van der Waals interaction with the surface), or with non-covalent attachment. Alternatively, the specific binding members can be covalently attached to the waveguide through chemical coupling means known in the art. The reactive surface can be derivatized directly with a variety of chemically reactive groups which then, under certain conditions, form stable covalent bonds with the applied specific binding member. The application of the capture specific binding members onto the reactive surface can be accomplished by any convenient means, such as manual use of micropipets or microcapillary tubes or by automated methods such as positive displacement pumps, X-Y positioning tables, and/or ink jet spraying or printing systems and the like. Any suitable density (quantity per unit area) of capture specific binding members on the reactive surface can be used.

In addition to immobilization of capture specific binding member to the reactive surface, the reactive surface is preferably treated so as to block non-specific interactions between the reactive surface and analyte binding members in a fluid sample that is to be tested. In the case of a protein specific binding member (e.g. antigen, antibody or PNA) on the reactive surface, the blocking material should be applied after immobilization of the specific binding member. Suitable blocking materials include, without limitation, casein, zein, bovine serum albumin (BSA), detergents and long-chain water soluble polymers. In the case of a nucleic acid SBM, the blocking material can be applied before or after immobilization of the SBM. Suitable blockers include those described above as well as 0.5% sodium dodecyl sulfate (SDS) and Denhardt's solution.

It should be understood that the first specific binding member can be specific for the analyte through the intermediary of additional cognate pairs if desired. For example, an oligonucleotide specific binding member might be biotinylated and attached to the reactive surface via a biotin-avidin cognate binding pair. Such an attachment is described, for example, by Hansen in EP 0 139 489 (Ortho), which is incorporated by reference in its entirety. Similarly, an oligonucleotide might be attached to the reactive surface through a mediator probe as disclosed, for example, by Stabinsky in U.S. Pat. No. 4,751,177 (Amgen), which is incorporated by reference in its entirety.

The nanoparticle can be attached to a first specific binding member of a second cognate binding pair. The second specific binding pair member can be referred to as a "label specific binding member" and the complex of the nanoparticle and label specific binding member is referred to as "label conjugate" or just "conjugate". For a direct sandwich assay format, the label specific binding member is specific for a second epitope on the analyte. This permits the analyte to be "sandwiched" between the capture specific binding member and the label specific binding member. In an indirect sandwich assay format, the label specific binding member is specific for a site or reporter group that is associated with the analyte. For example, once an antigenic analyte is captured, a biotinylated antibody can be used to "sandwich" the analyte, and biotin-specific label specific binding member is used. This indirect sandwich format is also useful for nucleic acids. In this case the capture specific binding member can be an oligonucleotide complementary to the target and the target can contain a specific binding reporter molecule (e.g. biotin or a hapten, typically incorporated via an amplification procedure such as LCR or PCR) and the label specific binding member can be chosen to be specific for the reporter group.

The label specific binding member can be specific for its respective partner (analyte or first specific binding member, depending on the format) through intermediary cognate pairs, as was the case with the capture specific binding member. For example, if the analyte is an oligonucleotide such as an amplification product bearing a hapten reporter group, a sandwich assay format might include a nanoparticle conjugated to antihapten antibody. Thus, the label specific binding member is specific for the analyte via the hapten-antihapten cognate binding pair.

Regardless of the assay format, the label specific binding member can attach to the nanoparticle to form the conjugate. As with capture specific binding member, the label specific binding member can be covalently bonded to the nanoparticle. Physical adsorption of label specific binding member onto nanoparticles is also suitable. In such case, the attachment need only be strong enough to withstand the subsequent reaction conditions without substantial loss of nanoparticle, e.g. from washing steps or other fluid flow.

A large number of strategies suitable for coupling the nanoparticle and the label specific binding member exit. See, for instance, U.S. Patent No. 6,506,564, issued Jan. 14, 2003; USSN 2003/0022169, filed March 28, 2001; USSN 2003/0087242, filed Dec. 7, 2001; USSN 2003/0113740, filed April 18, 2002; USSN 2002/0177143, filed Dec. 28, 2001; WO0173123, filed March 28, 2001; WO02046472, filed 12/7/01; and WO03008539, filed May 22, 2002.

Scattered light can be detected visually or by photoelectric means. For visual detection, the observer visually determines whether or not scattering has occurred at a discrete region. For instance, scattering is observed when the discrete region appears brighter than the surrounding background or a control spot that contains uncomplexed particles located at an adjacent region. Alternatively, the observer can determine what color of light is scattered at a discrete region. For instance, a scatter color of orange at a discrete region of interest can be compared to the surrounding background or to a control spot containing uncomplexed particles that scatters no light or weak green light depending on particle size located at an adjacent region. If there are numerous discrete regions, a photoelectric detection system is preferred. Photoelectric detection systems include any system that uses an electrical signal which is modulated by the light intensity and/or frequency at the discrete region.

There are three avenues with different modes of illumination and imaging that are demonstrated herein for the detection of gold nanoparticle complexes on transparent substrates for the purposes of biomolecule or molecular detection. In the first method, planar illumination of a transparent substrate with white light generates an evanescent wave on the slide surface, and the light scattered from samples on the substrate is collected with a monochrome photosensor (e.g. CMOS or CCD). In the second method, planar illumination of a transparent substrate with white light generates an evanescent wave on the slide surface, and the light scattered from samples on the substrate is collected with a color photosensor (e.g. CMOS or CCD). In the third method, planar illumination of a transparent substrate with a specific wavelength of light generates an evanescent wave at the slide surface, and the light scattered from samples on the substrate is collected with a monochrome or color photosensor. An alternative method is planar illumination of a transparent substrate with white light, which generates an evanescent wave at the slide surface, and the light scattered from samples on the substrate is filtered with a specific wavelength filter and collected onto a monochrome photosensor. In addition, the light scattered from probe complexes formed in the presence of neutral or anionic polysaccharide can be monitored using non-evanescent scattering techniques.

Unless otherwise required by context, singular terms used herein shall include pluralities and plural terms shall include the singular.

### EXAMPLES

The invention is demonstrated further by the following illustrative examples. The examples are offered by way of illustration and are not intended to limit the invention in any manner. In these examples all percentages are by weight if for solids and by volume if for liquids, and all temperatures are in degrees Celsius unless otherwise noted.

### EXAMPLE 1

### Preparation of nanoparticle-oligonucleotide conjugate probes

In this Example, a representative nanoparticle-oligonucleotide conjugate detection probe was prepared for the use in the detection of APC, Factor V Leiden gene, or mecA gene targets.

### (a) Preparation of 15 nm diameter gold nanoparticles

Gold colloids (∼ 15 nm diameter) were prepared by reduction of HAuCl₄ with citrate as described in Frens, 1973, Nature Phys. Sci., 241:20-22 and Grabar, 1995, Anal. Chem. 67:735. Briefly, all glassware was cleaned in aqua regia (3 parts HCl, 1 part HNO₃), rinsed with Nanopure H₂O, then oven dried prior to use. HAuCl₄ and sodium citrate were purchased from Aldrich Chemical Company. Aqueous HAuCl₄ (1 mM, 500 mL) was brought to reflux while stirring. Then, 38.8 mM sodium citrate (50 mL) was added quickly. The solution color changed from pale yellow to burgundy, and refluxing was continued for 15 min. After cooling to room temperature, the red solution was filtered through a Micron Separations Inc. 0.2 micron cellulose acetate filter. Au colloids were characterized by UV-vis spectroscopy using a Hewlett Packard 8452A diode array spectrophotometer and by Transmission Electron Microscopy (TEM) using a Hitachi 8100 transmission electron microscope.

### (b) 30, 40, and 50 nm diameter gold nanoparticles

Solutions of 30, 40, and 50 nm diameter gold particles were purchased from Ted Pella, Inc. for the described experiments.

### (c) Synthesis of steroid disulfide modified oligonucleotides (SDO)

Oligonucleotides complementary to segments of the APC gene DNA sequence or Factor V Leiden gene DNA sequence were synthesized on a 1 micromole scale using a Applied Biosystems Expedite 8909 DNA synthesizer in single column mode using phosphoramidite chemistry. Eckstein, F. (ed.) Oligonucleotides and Analogues: A Practical Approach (IRL Press, Oxford, 1991). All synthesis reagents were purchased from Glen Research or Applied Biosystems. Average coupling efficiency varied from 98 to 99.8%, and the final dimethoxytrityl (DMT) protecting group was removed from the oligonucleotides so that the steroid disulfide phosphoramidite could be coupled.

To facilitate hybridization of the probe sequence with the target, a deoxyadenosine oligonucleotide (dA₂₀) or deoxyadenosine oligonucleotide -polyethylene glycol (dA₁₅-PEG) was included on the 5' end in the probe sequence as a spacer.

To generate 5'-terminal steroid-cyclic disulfide oligonucleotide derivatives (see Letsinger et al., 2000, Bioconjugate Chem. 11:289-291 and PCT/US01/01190 (Nanosphere, Inc.), the disclosure of which is incorporated by reference in its entirety), the final coupling reaction was carried out with a cyclic dithiane linked epiandrosterone phosphoramidite on Applied Biosystems automated Expedite 8909 synthesizer, a reagent that prepared using trans 1,2 -dithiane-4,5-diol, epiandrosterone and p-toluenesulphonic acid (PTSA) in presence of toluene. The phosphoramidite reagent may be prepared as follows: a solution of epiandrosterone (0.5g), trans 1,2-dithiane-4,5-diol (0.28 g), and p-toluenesulfonic acid (15 mg) in toluene (30 mL) was refluxed for 7 h under conditions for removal of water (Dean Stark apparatus); then the toluene was removed under reduced pressure and the reside taken up in ethyl acetate. This solution was washed with 5 % NaHCO₃, dried over sodium sulfate, and concentrated to a syrupy reside, which on standing overnight in pentane/ether afforded a steroid-dithioketal compound as a white solid (400 mg); Rf (TLC, silica plate, ether as eluent) 0.5; for comparison, Rf values for epiandrosterone and 1,2-dithiane-4,5-diol obtained under the same conditions are 0.4, and 0.3, respectively. The compound was purified by column chromatography. Subsequently, recrystallization from pentane/ether afforded a white powder, mp 110-112 °C; ¹H NMR, δ 3.6 (1H, C³OH), 3.54-3.39 (2H, m 2OCH of the dithiane ring), 3.2-3.0 (4H, m 2CH₂S), 2.1-0.7 (29H, m steroid H); mass spectrum (ES⁺) calcd for C₂₃H₃₆O₃S₂ (M+H) 425.2179, found 425.2151. Anal. (C₂₃H₃₇O₃S₂) S: calcd, 15.12; found, 15.26. To prepare the steroid-disulfide ketal phosphoramidite derivative, the steroid-dithioketal (100 mg) was dissolved in THF (3 mL) and cooled in a dry ice alcohol bath. N,N-diisopropylethylamine (80 µL) and β- cyanoethyl chlorodiisopropylphosphoramidite (80 µL) were added successively; then the mixture was warmed to room temperature, stirred for 2 h, mixed with ethyl acetate (100 mL), washed with 5% aq. NaHCO₃ and with water, dried over sodium sulfate, and concentrated to dryness. The residue was taken up in anhydrous acetonitrile and then dried under vacuum; yield 100 mg; ³¹P NMR 146.02. The epiandrosterone-disulfide linked oligonucleotides were synthesized on Applied Biosystems Expedite 8909 gene synthesizer without final DMT removal. After completion, epiandrosterone-disulfide linked oligonucleotides were deprotected from the support under aqueous ammonia conditions and purified on HPLC using reverse phase column.

Reverse phase HPLC was performed with a Dionex DX500 system equipped with a Hewlett Packard ODS hypersil column (4.6 x 200 mm, 5 mm particle size) using 0.03 M Et₃NH⁺ OAc⁻ buffer (TEAA), pH 7, with a 1%/min. gradient of 95% CH₃CN/5% TEAA. The flow rate was 1 mL/ min. with UV detection at 260 nm. Preparative HPLC was used to purify the DMT-protected unmodified oligonucleotides. After collection and evaporation of the buffer, the DMT was cleaved from the oligonucleotides by treatment with 80% acetic acid for 30 min. at room temperature. The solution was then evaporated to near dryness, water was added, and the cleaved DMT was extracted from the aqueous oligonucleotide solution using ethyl acetate. The amount of oligonucleotide was determined by absorbance at 260 nm, and final purity assessed by reverse phase HPLC.

### (d) Attachment of SDOs to 30, 40, or 50 nm diameter gold particles

Solutions of 30, 40, or 50 nm diameter gold particle were used as delivered from Ted Pella, Inc. The gold nanoparticle probes were prepared by loading the gold particles with steroid disulfide modified oligonucleotides using a modification of a previously developed literature procedure ¹⁵. Briefly, 8 nmol of SDO was added per 3 mL of gold nanoparticle and incubated for 15 hours at room temperature. After 24 hours, aqueous sodium dodecyl sulfate (SDS, 10 % by weight) was added to the solution (final concentration: 0.01%). Then, aqueous 2 M NaCl was added to a final concentration of 0.1 M NaCl. After standing for 24 additional hours, the NaCl concentration was increased to 0.2 M. This was repeated the following day to bring the NaCl concentration of the probe solution to 0.3 M. After 24 additional hours, the SDO-gold nanoparticle conjugates were isolated with a Beckman Coulter Microfuge 18 by centrifugation (5000 rpm for 25 minutes for 30 nm, 3000 rpm for 15 minutes for 40 nm, 3000 rpm for 15 minutes for 50 nm). After centrifugation, a dark red gelatinous residue remained at the bottom of the eppendorf tube. The supernatant was removed, and the conjugates were washed (2x) with 0.1 M NaCl, 10 mM phosphate (pH 7) (original colloid volume) and redispersed in 20 mM Tris HCL (pH 7).

The following nanoparticle-oligonucleotide conjugates specific for segments of the APC gene of the human genome were prepared in this manner:
Probe APC 1-WT: gold-S'-5'-[a₂₀-gcagaaataaaag-3']ₙ (SEQ ID NO: 1)
Probe APC 1-MUT: gold-S'-5'-[a₂₀-gcagaaaaaaaag-3']ₙ (SEQ ID NO:2)
Probe APC 2: gold-S'-5'-[a₂₀-aaaagattggaacta-3']ₙ (SEQ ID NO:3)
Probe Factor V 1-WT: gold-S'-5'-[a₂₀-tattcctcgcc-3']ₙ (SEQ ID NO: 4)
Probe Factor V 1-MUT: gold-S'-5'-[a₂₀-attccttgcc-3']ₙ (SEQ ID NO: 5)
Probe Factor V 2: gold-S'-5'-[a₂₀-ctgctcttacagattagaag-3']ₙ (SEQ ID NO: 6)

S' indicates a connecting unit prepared via an epiandrosterone disulfide group; n indicates that a number of oligonucleotides are attached to each gold nanoparticle.

**Table 1. Sequences of synthetic targets and PCR amplicons probes used for assay development.**

| | | |
|---|---|---|
| MTHFR gene 119 PCR amplicon | | SEQ ID NO. 7 |
| APC gene 78 base sequence -Wild type (1) | | SEQ ID NO:8 |
| APC gene 78 base sequence -Mutant (2) | | SEQ ID NO:9 |
| Factor V Leiden 99 bp PCR product | | SEQ ID NO:10 |

### EXAMPLE 2.

### The use of dextran sulfate as a hybridization facilitator for detection of double stranded nucleic targets with DNA-modified gold nanoparticle probes.

Metallic nanoparticles (30 -120 nm diameter) have the potential to be used in homogeneous scatter-based detection of specific nucleic acid sequences in PCR amplicons or even genomic DNA samples, which has never been demonstrated. Light scatteredfrom gold or silver particle increases with the sixth power of the radius , and a specific color of scattered light is emitted based on the particle composition, size, and shape.^{18, 19} For example, 30 - 60 nm diameter gold particles scatter green colored light based on the surface plasmon resonance frequency, and light scattered from gold particles in this size range can be detected at picomolar - femtomolar particle concentrations using detection instrumentation that monitors non-evanescent light scattering.^{18, 19} In homogeneous reactions, the color of absorbed or scattered light changes if the particles are brought into close proximity. Therefore, it is highly desirable to use the light scattering capabilities of metallic nanoparticles to detect specific biomolecules.

The use of metallic nanoparticles in homogeneous biomolecule detection assays has been limited to date because conditions used for homogeneous detection of bioanalytes (e.g. DNA, proteins) have not been directly applicable to gold nanoparticle probes. For example, it was previously demonstrated that a snap freeze was required to bind 15 nm diameter gold particle probes labeled with DNA to a denatured double stranded nucleic acid. However, freezing is not amenable to automation and promotes mismatch formation at the lower temperature, and therefore, it is not suitable for more complex target analyte samples such as genomic DNA where a large number of non-target sequences are present, or for protein-based reactions where continuous freeze-thaw reactions may damage the protein or antibody. Even with longer PCR amplicons or certain sequences, freezing can lead to intrastrand base-pairing preventing nanoparticle probe - analyte target complex formation.

Previous studies have demonstrated that nucleic acid hybridization reactions are accelerated by polysaccharides such as the anionic polysaccharide dextran sulfate. Dextran sulfate was tested as a facilitator of gold probe - target analyte complex formation using 40 nm diameter gold probes labeled with nucleic acids (SEQ ID NO: 4 and 6) that are complementary to a Factor V Leiden PCR amplicon (SEQ ID NO: 10). For testing, 5 ul of each probe (705 pM), 5 uL of PCR amplicon (SEQ ID NO: 10), 1ul of 25 mM MgCl₂, and 4 uL of x % dextran sulfate were added to vary the dextran sulfate concentration. Five microliters of an MTHFR 119 bp PCR amplicon (SEQ ID NO: 7) was used as a negative control for this set of experiments. The solutions were hybridized for 15 minutes at room temperature, and then 1 ul of the sample was spotted onto a poly-L-lysine glass slide and imaged wet using a color CMOS, Figure 2. As expected, no color changes were observed under standard hybridization conditions indicating that no gold probe - target analyte complexes were formed. With the addition of 5 % dextran sulfate, light scattered from the FV 99 target solution exhibited a highly intense orange color, while significantly less intense green light was scattered from the remaining target and control solutions. This indicates that dextran sulfate enables gold probe - target analyte complex formation in a homogeneous reaction.

### EXAMPLE 3.

### The use of dextran sulfate as a hybridization facilitator for detection of double stranded nucleic targets with DNA-modified gold nanoparticle probes.

An experiment similar to that described in Example 2 was performed using a mecA gene sequence in place of the Factor V Leiden gene. A pair of 40 nm diameter gold probes (SEQ ID NO: 11 and 12) designed to bind to a mecA gene PCR amplicon (281 bp, SEQ ID NO: 14) was used in initial testing. A ∼ 6 nM mecA 281 base-pair PCR fragment (5 µL, fragment length and approximate concentration determined with an Agilent Bioanalyzer) was mixed with 6 µL of 40 nm diameter gold probe (1:1 ratio, 50 pM total probe), and 4 µL of hybridization buffer (buffer contains 20% formamide, 16% dextran sulfate, and 3.75mM MgCl₂). The solutions were heated to 95°C for 30 seconds and incubated in a water bath at 40°C for 15 min. A 1 µL aliquot of each sample was spotted and imaged wet. As shown in Fig. 3, gold probe samples containing more than 2 % dextran sulfate exhibited a color change from green to orange when hybridized for 15 minutes to a 100 fold molar excess of a 281 base-pair mecA gene PCR fragment, while no color change was observed for the same test samples that contained less than 1% dextran sulfate. A no target control containing 4 % dextran sulfate also remained green, demonstrating that the color change was hybridization specific. Target solutions with less than 1% dextran sulfate remained green even after hours of hybridization demonstrating that the concentration of dextran sulfate was an important factor in this homogeneous assay format.

### EXAMPLE 4.

### Homogeneous SNP Identification in PCR amplicons using gold probe (30, 40, or 50) hybridization mediated by an anionic polysaccharide in conjunction with scatter-based detection.

To demonstrate utility in homogeneous SNP identification, assays were designed for a single base mutation (T→ A at APC nucleotide 3920) in the APC gene, which is referred to as the I1307K mutation. Wild type specific (APC 1- WT; SEQ ID NO: 1) and mutant specific (APC 1-MUT; SEQ ID NO: 2) oligonucleotide probes were designed for detection, along with a second oligonucleotide probe (APC 2; SEQ ID NO: 3) specific for a region adjacent to the SNP. The oligonucleotide probes were attached to 30, 40, and 50 nm Au probes for testing. For 30 nm Au probes, 5 ul of 2 nM wild type probe (APC-1 WT) or mutant probe (APC 1-MUT), and 5 ul of 2 nM APC2 probe, were mixed with 5 ul of wild type (SEQ ID NO: 8), mutant (SEQ ID NO: 9), or heterozygous APC gene PCR amplicons. To each of these samples, 2 uL of 25% dextran sulfate and 0.5 uL of 25 mM Much were added. The samples were heat denatured for 30 seconds at 95 °C followed by incubation at room temperature for 10 minutes. A 1 uL aliquot of each sample was spotted onto a poly-L-lysine slide and imaged, FIG. **4****.** Three different illumination/detection methodologies were evaluated. In the first detection method, the plane of the glass slide is illuminated with white light generating an evanescent wave at the sample surface²⁰, and an image is captured with a color CMOS detector, FIG. **4A.** In the second detection method, the plane of the glass slide is illuminated with white light, and an image of the slide is captured using a monochrome CMOS detector, FIG. **4B.** In the third detection method, the plane of the glass slide is illuminated with a red LED, and an image of the slide is captured using a monochrome CMOS detector, FIG. **4C.** In addition, another approach not tested is to illuminate with white light and use a specific wavelength filter to select for specific wavelengths characteristic to the gold probe complexes to enhance signal differentiations although this has not been tested to date. The three genotypes are differentiable based on the intensity of light scattered from the wild type and mutant probe reactions using all three different imaging methods. For the color CMOS imaging, the genotypes are also differentiable on the basis of color of scattered light, where the matched target/probe solutions exhibit intense orange scatter, and the mismatched target/probe solutions exhibit little to no scatter.

This experiment was repeated for 40 nm diameter gold particle probes using the same set of sequences, assay conditions, and protocol with the exception that the initial probe concentration was 1 nM rather than 2 nM. The results of this set of experiments are shown in FIG. **5****.** Again, the three genotypes are differentiable based on the intensity of light scattered from the wild type and mutant probe reactions using each imaging method. For the color CMOS imaging, the genotypes are also differentiable on the basis of color of light scattered (orange for a positive reaction, green for a negative reaction) from the wild type and mutant probe reactions, FIG. **5A****.** A noteworthy difference is the increase in green scatter from the 40 nm gold probe samples when compared to the 30 nm gold probe samples, FIGS. **4A** and **5A****.** Red LED illumination minimizes this background scatter by selectively illuminating the gold probe complexes, FIG. **5C****.**

This experiment was repeated for 50 nm diameter gold particle probes using the same set of sequences, assay conditions, and protocol, with the exception that the initial probe concentration was 500 pM rather than 2 nM. The results of this set of experiments are shown in FIG. **6****.** The three genotypes are differentiable based on the intensity of light scattered from the wild type and mutant probe reactions using each imaging method. For the color CMOS imaging, the genotypes are also differentiable on the basis of color of light scattered (orange for a positive reaction, green for a negative reaction) from the wild type and mutant probe reactions, FIG. **6A****.** There is an even larger increase in green scatter from the uncomplexed 50 nm gold probe samples due to a further increase in probe size. This background scatter is minimized by using red LED illumination.

### EXAMPLE 5.

### Detection sensitivity using anionic polysaccharides and scatter-based imaging

The principle challenge of obtaining high sensitivity bioanalyte detection in homogeneous reactions involving gold nanoparticle probes is the ability to bind probes efficiently at low (< nM) probe concentrations. Low probe concentrations are required because in a homogeneous reaction format, any probe that is not bound to target contributes to the background signal. This presents a major kinetic issue for large gold nanoparticles (> 30 nm diameter) which diffuse very slowly. In addition, previous studies used probe concentrations that were equivalent or lower than the target concentration to produce a detectable color change. As a result, there have been no studies that demonstrate homogeneous binding and subsequent color changes produced with a substantial excess (> 10:1) of probe over target.

Using dextran sulfate to promote gold probe - target analyte complex formation in combination with evanescent induced light scatter detection, we tested assay sensitivity in a titration experiment using a synthetic *mecA* gene target, FIG. **7****.** Oligonucleotide probes designed to bind to adjacent regions of the *mecA* gene were attached to 50 nm diameter gold particles (SEQ ID NO: 11 and 12). The sequences are as follows:
Probe MecA 1: gold-S'-5'-[a₁₅PEG-atggcatgagtaacgaagaata-3']ₙ (SEQ ID NO: 11)
Probe MecA 2: gold-S'-5'-[a₁₅-PEG-ttccagattacaacttcacca-3']ₙ (SEQ ID NO: 12)
Target MecA 3: 5' tgg tga agt tgt aat ctg gaa ctt gtt gag cag agg ttc ttt ttt atc ttg ggt taa ttt att ata ttc ttc gtt act cat gcc at 3' (SEQ ID NO: 13)

Various concentrations of target (5 uL) (SEQ ID NO: 13) were mixed with 3 uL of each probe at 20 pM (SEQ ID NO: 11 and 12), and hybridization buffer consisting of 0.6 uL of 25 mM MgCl₂, 2.6 uL of 25 % dextran sulfate, and 0.8 uL of formamide. A solution containing no target was used as a negative control. The solutions were heated at 95 °C for 30 seconds, followed by incubation at room temperature for two hours. A 1 uL aliquot of the solution was pipetted onto a poly-L-lysine slide, and the slide was placed in a dessicator until the samples were dried onto the slide. This procedure concentrated the samples onto the glass slide intensifying the amount of scattered light from each sample. The slide was illuminated with white light in the plane of the glass slide, and imaged visually or using a color CMOS, FIG. 7. A change in scatter color from green (the negative control) to yellow was observed for the lowest target concentration tested (3 x 10⁶ total copies in 15 uL, 333 femtomolar concentration). Above 3 x 10⁸ total copies, a change in scatter color from green to orange was observed. Thus, no more than 2x10⁵ target molecules (333 zmol) were required under these assay conditions for visual detection of the color change in a 1 uL spot. This sensitivity was roughly 4 orders of magnitude higher than the previously reported 10 fmol detection limit (3 x 10⁹ copies/µL in a 2 µL reaction) achieved by visual analysis of reflected light from aliquots spotted onto a thin layer chromatography plate⁹.

This substantial increase in sensitivity may be attributed to three main factors. First, monitoring scattered light enabled detection of significantly lower nanoparticle concentrations when compared to detection of absorbed or reflected light^{18, 21, 22}. The samples from this experiment could not be detected visually when a 1 µl aliquot was spotted onto a reverse phase plate because the total probe concentration was only 8 picomolar. Second, assuming every target was complexed with two particles, there was an approximate 24 fold excess of non-aggregated particles at the lowest target concentration when a color change was still observable. Thus, target hybridization can be driven with an excess of probe, and lower concentrations of target can be detected with nanoparticle concentrations visually detectable by scatter. The 50 nm diameter particles were expected to promote a larger colorimetric shift than the 15 nm diameter particles due to increased gold volume¹⁶, but this surprising result also indicated that the probe-target complexes must exhibit a large increase in scatter intensity compared to individual probes (also see example 6, FIG. 8). Third, the use of dextran sulfate enhanced hybridization kinetics²³, permitting rapid probe-target hybridization even at low (picomolar) concentrations of probe (also see Example 2).

### EXAMPLE 6.

### Gold nanoparticle probe complexes increase scatter intensity

The relative scattering intensity of probe/target complexes can be monitored using a diode array detector, FIG. 8. Five microliter target samples (SEQ ID NO: 13) were mixed with 6 µL of 50 nm diameter gold probes (SEQ ID NO: 12 and 15) (1:1 ratio, 20 pM total probe), and 4 µL of hybridization buffer (containing 20% formamide, 16% dextran sulfate, and 3.75mM MgCl₂). A solution containing hybridization buffer and both probes without target was used as a negative control. The solutions were heated at 95°C for 30 seconds, followed by incubation at room temperature for two hours. A 1 uL aliquot of the solution was spotted, and the slide was placed in a dessicator until the samples were dried prior to imaging. The resulting samples were then spotted and dried onto poly-L-lysine slides and placed in an evanescent illuminator. The spectra were collected using a USB 2000 photodiode spectrometer from Ocean Optics, Inc. configured for operation in the 350-1000 nm range, FIG. 8. To establish spectral correction factors accounting for nuances in the spectrophotometer and the light source, all samples were normalized to a filtered solution of Ludox TM-50. As the target concentration increases, the scattering intensity increases in the wavelength region of 600-800 nm. Given that the overall probe concentration was the same for each experiment, it was concluded that the probe-target complex formation substantially enhanced scatter intensity. Consequently, probe-target complexes can be detected in a background of uncomplexed probes as described in Example 5.

### EXAMPLE 7.

### Formation of gold nanoparticle probe complexes

To demonstrate that the scatter-based color and intensity changes were due to the formation of gold probe complexes and not single particles binding to nucleic acid targets, a control experiment was performed wherein a mecA 281 base-pair PCR amplicon (SEQ ID NO: 14) was hybridized to a single complementary 50 nm diameter gold probe sequence in solution (MecA 1 SEQ ID NO: 11 or MecA 2 SEQ ID NO: 12), or to two gold probes complementary to the target in the same solution (MecA 1 and 2 together, SEQ ID NO's: 11 and 12).

The reaction conditions were 80 pM total probe, 1 mM MgCl₂, 4.33 % dextran sulfate, 5.33% formamide, and 13 nM of mecA 281 bp PCR product (SEQ ID NO: 14). A solution with both probes in the absence of target was used as a negative hybridization control. The solutions were denatured at 95 °C for thirty seconds, hybridized for two hours at room temperature, and subsequently a 1 ul aliquot was spotted onto a poly lysine coated glass slide and imaged, FIG. **9**. The light scattered by the solution with both probes was an intense orange color, while the solutions containing a single probe or no target exhibit much weaker green scatter. This experiment demonstrates that both probes are required to see a scatter change.

### EXAMPLE 8.

### MecA gene detection from unamplified genomic DNA using 50 nm gold probes

To test the feasibility of directly detecting DNA sequences without using enzyme-based target or signal amplification procedures, an experiment was conducted for detection of the *mecA* gene in clinical samples of methicillin resistant *S. aureus* (MRSA)²⁴. The *mecA* gene confers resistance to the antibiotic methicillin. In addition to high sensitivity, this also requires high selectivity since the probes must hybridize specifically to the target sequence in the presence of highly complex DNA. 50 nm diameter gold probes (SEQ ID NO: 11 and 12) that hybridize to adjacent regions of the *mecA* gene were used for detection.
Probe MecA 1: gold-S'-5'-[a₁₅-PEG-atggcatgagtaacgaagaata-3']ₙ (SEQ ID NO: 11)
Probe MecA 2: gold-S'-5'-[a₁₅-PEG-ttccagattacaacttcacca-3']ₙ (SEQ ID NO: 12)

Purified genomic DNA samples for both a methicillin positive bacterium (MRSA) and methicillin negative bacterium (MSSA) were ordered from ATCC (Item Nos. 700699D and 35556D, respectively) and resuspended in 20mM Tris to a final concentration of 1 µg/µL. The samples were sonicated on ice using 3 consecutive 10 second, 3-watt pulses and then diluted with Tris buffer to a final concentration of 100 ng/µL. A 1 µL aliquot of each genomic DNA solution was then combined with 6 µL of a probe solution containing 10 pM of each probe (SEQ ID NO: 11 and 12). Subsequently, 4 µL of a hybridization solution containg 3.75 mM MgCl₂, 16 % (V/V) dextran sulfate, and 18.75 % (V/V) formamide was added to the sample. The entire mixture was heated to 95°C for 30 seconds, followed by incubation at 37°C for 45 minutes. One microliter of each sample was then spotted on a poly-L-lysine slide, and the slide was evanescently illuminated with white light and imaged visually or with a color CMOS sensor while the solutions remained wet, FIG. **10**. Light scattered from the negative control MSSA (mecA-) genomic DNA sample appeared green while the MRSA (mecA+) appeared as a bright yellow-orange. These results demonstrated that this assay can be used to detect specific gene sequences in unamplified genomic DNA. To our knowledge, this is the first example of a homogeneous assay that can detect genomic DNA sequences without enzymatic intervention.

### EXAMPLE 9.

### MecA gene detection from unamplified genomic DNA samples using 50 nm gold probes

The scatter-based colorimetric assay also can be used to detect specific gene sequences from unamplified genomic DNA samples after the samples are dried onto the slide. This procedure can enhance detection sensitivity by decreasing interparticle distance. This principle was demonstrated by detecting the *mecA* gene from purified *Staphylococcus aureus* genomic DNA samples that were fragmented by sonication. In this example, two 50nm gold probes (SEQ ID NO: 11 and 12, respectively) that hybridize to adjacent regions of the *mecA* gene were used for detection.
Probe MecA 1: gold-S'-5'-[a₁₅-PEG-atggcatgagtaacgaagaata-3']ₙ (SEQ ID NO: 11)
Probe MecA 2: gold-S'-5'-[a₁₅-PEG-ttccagattacaacttcacca-3']ₙ (SEQ ID NO: 12)

Purified *Staphylococcus aureus* genomic DNA samples for both a methicillin resistant bacterium (MRSA) and methicillin sensitive bacterium (MSSA) were ordered from ATCC (Item Nos. 700699D and 35556D, respectively) and resuspended in 20mM Tris to a final concentration of 1 µg/µL. The samples were sonicated on ice using three, consecutive 10-second, 3-watt pulses, and then diluted with Tris buffer to a final concentration of 100 ng/µL, 50 ng/µL, or 25 ng/µL. For the assay, a 1 µL aliquot of each genomic DNA sample was combined with 1.2 µL of a probe solution containing 12.5 pM of each probe (SEQ ID NO: 11 and 12). Subsequently, 0.6 µL of a hybridization solution consisting of 3.75 mM MgCl₂, 16 % (V/V) dextran sulfate, and 18.75 % (V/V) fonnamide was added to the sample. The entire mixture was heated to 95°C for 30 seconds, followed by incubation at 37°C for 40 minutes. One microliter of each sample was then spotted on a poly-L-lysine slide at 43°C and allowed to dry for 10 minutes. The slide was then evanescently illuminated with white light, and the color of scattered light from each spotted sample was imaged visually or with a color CMOS sensor, FIG. 11. The methicillin resistant *S. aureus* (MRSA) samples were detectable by either method at concentrations as dilute as 8 ng/µL based on a change in scatter color from green to orange. The light scattered by the methicillin sensitive *S. aureus* (MSSA) negative control samples appeared green in color indicating no significant non-specific binding with background genomic DNA under these detection conditions. This experiment demonstrates that specific gene sequences can be detected from unamplified genomic DNA samples after the samples are spotted and dried onto the slide.

### EXAMPLE 10.

### Signal Quantitation and Reproducibility of MecA gene detection from unamplified genomic DNA samples using homogeneous detection with gold nanoparticle probes

In addition to visual analysis, the colorimetric signals generated by this assay can be quantified by analyzing signal intensity in the red channel of an RGB sensor such as a color CCD. For two probe detection, a 100 ng/µL solution of MRSA, MSSA, and MRSE (2 µL) was combined with 2.4 ul of 40 nm diameter gold probes (sequence ID NO's: 11 and 12 at a 1:1 ratio, 25 pM total probe), and 1.6 µL of hybridization buffer (consisting of 3.75 mM MgCl₂, 16 % (V/V) dextran sulfate, and 18.75 % (V/V) formamide). The entire mixture was heated to 95°C for 1.5 minutes, followed by incubation at 37°C for one hour. One µL of each sample was spotted onto a slide at 43°C and allowed to dry for 10 minutes. The evanescent induced scatter from the glass slide was imaged with a color CMOS sensor. The net signal intensity in the red channel of the color CMOS sensor was quantified for each spot (three replicates of each genomic DNA sample tested) using Genepix software from Axon instruments, FIG. **12A****.** Signal quantitation also was achieved using the Verigene^{™} ID detection system designed at Nanosphere (Northbrook, IL), which illuminated the glass slide with a red LED (λₑₓ = 630 nm central wavelength) and captured an image of the entire glass slide using a monochrome photosensor, FIG. **12B****.** The net signal intensity from each spot was quantified using Genepix software.

Analysis of methicillin resistant and sensitive Staphylococcus genomic DNA samples demonstrates that the visually observed colorimetric changes for methicillin resistant samples are quantifiable by both iimaging methods with signals that are 3 - 5 fold greater than the methicillin sensitive samples, and > 3 standard deviations above the negative control methicillin sensitive samples, FIG. **12****.** In addition, the signals generated by this assay are reproducible.

### EXAMPLE 11

### MecA gene detection from unamplified genomic DNA samples

### using more than two 50 nm gold probes

Since the colorimetric shift is dependent on the number of particles within the aggregate structure and the distance between the particles¹⁰, we reasoned that increasing the number of gold probes per target may provide higher sensitivity by enhancing the plasmon band red-shift. Two additional mecA gene probes (SEQ ID NOs: 15 and 16) were designed to bind in close proximity to the existing probes (SEQ ID NOs: 11 and 12) to test this hypothesis, FIG. **13****.** 50 nm diameter gold probes were prepared with each sequence for testing.
Probe MecA 1: gold-S'-5'-[a₁₅-PEG-atggcatgagtaacgaagaata-3']ₙ (SEQ ID NO: 11)
Probe MecA 2: gold-S'-5'-[a₁₅-PEG-ttccagattacaacttcacca-3']ₙ (SEQ ID NO: 12)
Probe mecA 3: gold-S'-5'-[a₁₅-PEG-aaagaacctctgctcaacaag-3']ₙ [SEQ ID NO: 15]
Probe mecA 4: gold-S'-5'-[a₁₅-PEG-gcacttgtaagcacaccttcag -3']ₙ [SEQ ID NO: 16]

Methicillin resistant (mecA+) and sensitive (mecA-) *Staphylococcus aureus* genomic DNA samples isolated from cultured bacterial cells were purchased from ATCC (Item Nos. 700699D and 35556D, respectively) and resuspended in 20mM Tris to a final concentration of 1 µg/µL. The samples were sonicated on ice using three consecutive 10 second, 3-watt pulses and then diluted with Tris buffer to a final concentration of 1 ng/µL or 200 pg/µL. For the assay, five microliters of each genomic DNA sample was combined with 6 µL of a probe solution containing 5 pM of each gold probe (SEQ ID NO: 11, 12, 15, and 16) in 20 mM Tris buffer. Subsequently, 4 µL of a hybridization solution consisting of 3.75 mM MgCl₂, 16 % (V/V) dextran sulfate, and 18.75 % (V/V) formamide was added to the sample. The entire mixture was heated to 95 °C for 30 seconds, followed by incubation at 37°C. After 2 hours, one microliter of each sample was spotted on a poly-L-lysine slide at 43°C and allowed to dry for 10 minutes. The slide was then evanescently illuminated with white light, and the color of scattered light from each spotted sample was imaged visually or with a color CMOS sensor, FIG. **14****.** The light scattered by positively detected samples will appear yellow to orange in color, whereas negative samples will scatter light that appears green in color.

The methicillin resistant *S. aureus* (mecA+) samples were detectable at concentrations as low as 66 pg/uL based on a change in scatter color from green to orange. The light scattered by the methicillin sensitive *S. aureus* (mecA-) negative control sample remained green in color indicating minimal non-specific binding to the background genomic DNA sequences present in the sample. 66 picograms of methicillin resistant *S. aureus* genomic DNA target was equivalent to approximately 20,000 copies (33 zmol) in the 1µL volume analyzed on the glass slide, which represented an order of magnitude increase in sensitivity when compared to the same analysis with only two DNA-GNP₅₀ probes. Equally important was the increase in the detectable probe/target ratio (∼230 fold), which suggested that a four probe complex enhanced both the colorimetric shift and scatter intensity when compared to a two probe complex.

Other methicillin resistant (mecA+) and sensitive (mecA-) genomic DNA samples isolated from cultured *S. epidennidis* bacterial cells (MRSE: Item No. 12228D and MSSE: Item No. 35984D obtained from ATCC) were tested using similar DNA preparation, assay, and imaging conditions, FIG. **15****.** The methicillin resistant *S. epidermidis* (mecA+) sample exhibited a change in scatter color from green to yellow while the light scattered by the methicillin sensitive *S. epidermidis* (mecA-) negative control sample remained green in color. The ability to effectively detect the mecA gene in unamplified genomic DNA samples isolated from multiple *Staphylococcus* subspecies further demonstrates the specificity of the scatter-based colorimetric detection assay.

### EXAMPLE 12

### Preparation of Antibody-Coated Gold Probes

Polyclonal anti-IgE antibodies are purchased from Chemicon International Inc. (Temecula, CA). Gold nanoparticles 40 - 60 nm in diameter are purchased from Ted Pella, Inc (Redding, CA). The anti-IgE antibodies are attached to gold nanoparticles via direct binding of the antibody to the gold particle (referred to as passive adsorption). The procedure was adapted from an existing protocol developed by British Biocell International. Briefly, the 40 - 60 nm diameter gold particles are adjusted to a pH between 9-10 using sodium carbonate buffer. 3 µg/mL of the antibody is added to the gold nanoparticle and incubated at room temperature for 1.0 hour. Next, the probes are filtered through 0.2 um diameter cellulose acetate, and then BSA is added to stabilize the particles. The antibody-gold nanoparticle conjugates are isolated by centrifugation at 2100 G for 25 minutes. The supernatant is removed following centrifugation, and the particles are redispersed in buffer (20 mM Tris buffer (pH 8.5), 0.1 % BSA and 0.01% azide). The final nanoparticle concentration is measured by UV-visible absorbance at 520 nm using an estimated extinction coefficient of ∈₅₂₀ = 1.5 x 10¹⁰ M⁻¹cm⁻¹ for the 50 nm diameter gold particles and ∈₅₂₀ = 2.8 x 10¹⁰ M⁻¹cm⁻¹ for the 60 nm diameter gold particles.

It should be noted that the probes are brought to 0.2 M NaCl, and the amount of probe aggregation is measured by analyzing the scatter color on a waveguide substrate prior to the BSA step. This ensures that the probes are stable and sufficient antibody is attached during the preparation process.

### EXAMPLE 13

### IgE Detection with Anti-IgE Antibody Coated Gold Probes

Evanescent illumination and scatter-based detection of gold probe complexes formed through antibody-antigen interactions was initially tested using 50 and 60 nm diameter gold probes coated with anti-IgE polyclonal antibody, FIG. **16****.** Binding of the anti-IgE coated gold probes to IgE target was tested with and without dextran sulfate. For testing, ten microliter samples containing IgE target (2 ul of 250 ng/mL) or an IgG negative control (2 ul of 250 ng/mL), 50 nm diameter anti-IgE gold probe (3 ul of 250 pM), and buffer (5 ul of 2 X PBS, 2 mM MgCl₂ or 2X PBS, 2 mM MgCl₂, 4% dextran sulfate) were prepared. One microliter of each sample was spotted onto a poly-L-lysine glass slide after 30 minutes, and after 4 hours of incubation. The glass slide was illuminated with white light in the plane of the slide, and the color of scatter light from each sample was observed visually or captured with a color CMOS detector, FIG. **17****.** After 30 minutes, light scattered from the IgE target sample containing dextran sulfate was a visually detectable yellow, while light scattered from the IgG negative control was a visually detectable green. By contrast, the light scattered from both the IgE target and IgG negative control samples without dextran sulfate was a visually detectable green. After 4 hours, light scattered by the IgE target sample containing dextran sulfate was a visually detectable orange, while the light scattered from the the samples without dextran sulfate remained a visually detectable green. These experiments demonstrate that dextran sulfate promotes the formation of antibody gold probe-antibody target complexes which leads to high sensitivity detection by evanescent induced colorimeter scatter.

The IgE target was titrated into 40 nm diameter anti-IgE gold probes to assess assay sensitivity. For the assay, 5 uL of 40 nm anti-IgE gold probe (500 pM) is added to 2 uL of IgE target (5, 1, 0.5, 0.25, or 0.1 ng/µL), IgG negative control, or water as a no target control, and 3 uL of incubation buffer consisting of 6.5 % dextran sulfate, 5 mM MgCl₂, and 3.5X PBS. Each sample is incubated at room temperature for 1 hour. A 1 ul droplet of each sample is subsequently transferred onto a glass slide illuminated with white light, and the scattered light from each deposited sample is captured visually or with a CMOS camera, FIG. **18****.** The color of light scattered by the IgE target samples at > 0.05 ng/uL was orange, while the color of light scattered by the IgG and no target control samples was a visually differentiable green. The red-shift in scatter color for the IgE target samples is attributed to the formation gold probe complexes that result from binding of the IgE target. These optical changes may be visually detected or imaged and quantitated as described in Examples 4 and 10.

### EXAMPLE 14

### Imaging colorimetric changes associated with individual gold probe complexes using evanescent illumination and high resolution optics.

A 1 ul aliquot of 50 nm diameter gold particles or gold probe complexes formed through DNA hybridization were spotted onto a glass slide, and the scatter from the solutions was imaged in the solution state via an evanescent wave generated with white light illumination in the plane of the glass slide, FIG. **19****.** The scattered light was collected through a 10 - 100X objective onto a color CCD camera. White light illumination in the plane of the glass slide and collection through a 10 - 100 X objective onto a color CCD camera provides high resolution images of individual particle scatter in the solution state which is green in color (the particles appear larger since the optical resolution is diffraction limited). More importantly, the individual gold probe complexes are also detectable in solution, with a concomitant change is the color of scattered light ranging from yellow to red, FIG. **19****.** This demonstrates that colorimetric changes associated with the formation of individual gold probe complexes is feasible using high resolution optics.

### REFERENCES

1. Kirk, B.W., Feinsod, M., Favis, R., Kliman, R.M. & Barany, F. Single nucleotide polymorphism seeking long term association with complex disease. Nucleic Acids Research 30, 3295-3311 (2002).
2. Whelen, A.C. & Persing, D.H. The role of nucleic acid amplification and detection in the clinical microbiology laboratory. Annual Review of Microbiology 50, 349-373 (1996).
3. Bernard, P.S. & Wittwer, C.T. Real-time PCR technology for cancer diagnostics. Clinical Chemistry 48, 1178-1185 (2002).
4. Kwok, P.Y. Methods for genotyping single nucleotide polymorphisms. Annual Review of Genomics and Human Genetics 2, 235-258 (2001).
5. Mackay, I.M., Arden, K.E. & Nitsche, A. Real-time PCR in virology. Nucleic Acids Research 30, 1292-1305 (2002).
6. Hall, J.G. et al. Sensitive detection of DNA polymorphisms by the serial invasive cleavage reaction. Proceedings of the National Academy of Sciences of the United States of America 97, 8272-8277 (2000).
7. Jenison, R., Yang, S., Haeberli, A. & Polisky, B. Interference-based detection of nucleic acid targets on optically coated silicon. Nature Biotechnology 19, 62-65 (2001).
8. Mirkin, C.A., Letsinger, R.L., Mucic, R.C. & Storhoff, J.J. A DNA-based method for rationally assembling nanoparticles into macroscopic materials. Nature 382, 607-609 (1996).
9. Elghanian, R., Storhoff, J.J., Mucic, R.C., Letsinger, R.L. & Mirkin, C.A. Selective colorimetric detection of polynucleotides based on the distance-dependent optical properties of gold nanoparticles. Science 277, 1078-1081 (1997).
10. Storhoff, J.J. et al. What Controls the Optical Properties of DNA-Linked Gold Nanoparticle Assemblies? Journal of the American Chemical Society 122, 4640-4650 (2000).
11. Thanh, N.T.K. & Rosenzweig, Z. Development of an aggregation-based immunoassay for anti- protein A using gold nanoparticles. Analytical Chemistry 74, 1624-1628 (2002).
12. Otsuka, H., Akiyama, Y., Nagasaki, Y. & Kataoka, K. Quantitative and reversible lectin-induced association of gold nanoparticles modified with alpha-lactosyl-omega-mercapto- poly(ethylene glycol). Journal of the American Chemical Society 123, 8226-8230 (2001).
13. Kim, Y.J., Johnson, R.C. & Hupp, J.T. Gold nanoparticle-based sensing of "spectroscopically silent" heavy metal ions. Nano Letters 1, 165-167 (2001).
14. Liu, J. & Lu, Y. A colorimetric lead biosensor using DNAzyme-directed assembly of gold nanoparticles. Journal of the American Chemical Society 125, 6642-6643 (2003).
15. Storhoff, J.J., Elghanian, R., Mucic, R.C., Mirkin, C.A. & Letsinger, R.L. One-pot colorimetric differentiation of polynucleotides with single base imperfections using gold nanoparticle probes. Journal of the American Chemical Society 120, 1959-1964 (1998).
16. Lazarides, A.A. & Schatz, G.C. DNA-Linked Metal Nanosphere Materials: Structural Basis for the Optical Properties. Journal of Physical Chemistry B 104, 460-467 (2000).
17. Reynolds, R.A., Mirkin, C.A. & Letsinger, R.L. Homogeneous, nanoparticle-based quantitative colorimetric detection of oligonucleotides. Journal of the American Chemical Society 122, 3795-3796 (2000).
18. Yguerabide, J. & Yguerabide, E.E. Light-scattering submicroscopic particles as highly fluorescent analogs and their use as tracer labels in clinical and biological applications - II. Experimental characterization. Analytical Biochemistry 262, 157-176 (1998).
19. Jin, R.C. et al. Photoinduced conversion of silver nanospheres to nanoprisms. Science 294, 1901-1903 (2001).
20. Storhoff, J.J. et al. Diagnostic detection systems based on gold nanoparticle probes. Biosensors and Bioelectronics, submitted for publication (2003).
21. Yguerabide, J. & Yguerabide, E.E. Light-scattering submicroscopic particles as highly fluorescent analogs and their use as tracer labels in clinical and biological applications - I. Theory. Analytical Biochemistry 262, 137-156 (1998).
22. Taton, T.A., Lu, G. & Mirkin, C.A. Two-color labeling of oligonucleotide arrays via size-selective scattering of nanoparticle probes. Journal of the American Chemical Society 123, 5164-5165 (2001).
23. Wetmur, J.G. Acceleration of DNA renaturation rates. Biopolymers 14, 2517-2524 (1975).
24. Chambers, H.F. Methicillin Resistance in Staphylococci: Molecular and Biochemical Basis and Clinical Implications. Clin. Microbiol. Rev. 10, 781-791 (1997).
25. Schultz, S., Smith, D.R., Mock, J.J. & Schultz, D.A. Single-target molecule detection with nonbleaching multicolor optical immunolabels. Proceedings of the National Academy of Sciences of the United States of America 97, 996-1001 (2000).

## Claims

1. A method of detecting for the presence or absence of a target analyte in a sample, the target analyte having at least two portions, the method comprising:
a. providing a type of nanoparticles, each nanoparticle having a specific binding complement of a target analyte attached thereto, the specific binding complement being capable of recognizing at least two different portions of the target analyte;
b. contacting the sample, the nanoparticles, and a polysaccharide having a molecular weight range of 80,000-650,000 under conditions effective to allow binding of the specific binding complement to at least two portions of the target analyte and form a free light scattering complex in the presence of a target analyte, wherein the light scattering complex has at least two nanoparticles bound to the target analyte;
c. illuminating the light scattering complex under conditions effective to produce scattered light from said complex; and
d. detecting a change in frequency in the form of color of the light scattered by said complex resulting from interaction between the nanoparticles being brought together into proximity by binding of the specific binding complement to the target analyte.

2. A method of detecting a target analyte in a sample, the target analyte having at least two portions, the method comprising:
a. providing at least two types of nanoparticles, each type of nanoparticles having specific binding complement of a target analyte attached thereto, the specific binding complement on each type of nanoparticles being capable of recognizing different portions of the target analyte;
b. contacting the sample, the at least two types of nanoparticles, and a polysaccharide having a molecular weight range of 80,000-650,000 under conditions sufficient to enable binding of the specific binding complements to at least two portions of the target analyte and form a free light scattering complex in the presence of the target analyte, wherein the light scattering complex has at least two nanoparticles bound to the target analyte; and
c. illuminating the light scattering complex under conditions effective to produce scattered light from said complex; and
d. detecting a change in frequency in the form of color of the light scattered by said complex resulting from interaction between the nanoparticles being brought together into proximity by binding of the specific binding complements to the target analyte.

3. The method of claim 2 wherein the target analyte is a protein or antibody and the specific binding complements are monoclonal antibodies.

4. The method of claim 2 wherein the target analyte is a protein or antibody and one of the specific binding complements is an aptamer and the other specific binding member is an antibody.

5. The method of claim 2 wherein the target analyte is a protein or antibody and one of the specific binding complements are aptamers.

6. The method of claim 5 wherein the nanoparticles are aptamer coated gold nanoparticles.

7. The method of claim 5 wherein the nanoparticles are antibody gold nanoparticles.

8. The method of claim 5 wherein the nanoparticles are DNA-modified gold nanoparticles.

9. The method of claim 2 wherein the target analyte is a gene sequence from a genomic DNA and has at least four portions, and said contacting step comprises contacting the gene sequence with at least four types of nanoparticles having oligonucleotides attached thereto, the oligonucleotides on the each type of nanoparticles having a sequence complementary to different portions of the gene sequence.

10. The method of claim 9, wherein the genomic DNA is bacterial DNA.

11. The method of claim 2 wherein the step of contacting the target analyte with at least two types of nanoparticles comprises sequentially contacting the target analyte with each of the types of nanoparticles.

12. The method of claim 2 wherein the step of contacting the target analyte with at least two types of nanoparticles comprises contacting the nanoparticles with the target analyte at the same time.

13. The method of claim 1 or claim 2, wherein the light scattering complex is present on a surface of a waveguide prior to said illuminating step.

14. The method of claim 1 or claim 2, wherein a least a portion of the light scattering complex is present on a surface of a waveguide prior to said illuminating step.

15. The method of claim 1 or claim 2, wherein the nanoparticle is metallic and said detecting step comprises observing a change in surface plasmon band.

16. The method of claim 1 or claim 2 wherein the target analyte and specific binding complement are complements of a specific binding pair.

17. The method of claim 1 or claim 2 wherein complements of a specific binding pair comprise nucleic acid, oligonucleotide, peptide nucleic acid, polypeptide, antibody, antigen, carbohydrate, protein, peptide, amino acid, hormone, steroid, vitamin, drug, virus, polysaccharides, lipids, lipopolysaccharides, glycoproteins, lipoproteins, nucleoproteins, oligonucleotides, antibodies, immunoglobulins, albumin, hemoglobin, coagulation factors, peptide and protein hormones, non-peptide hormones, interleukins, interferons, cytokines, peptides comprising a tumor-specific epitope, cells, cell-surface molecules, microorganisms, fragments, portions, components or products of microorganisms, small organic molecules, nucleic acids and oligonucleotides, metabolites of or antibodies to any of the above substances.

18. The method of claim 28 wherein nucleic acid and oligonucleotide comprise genes, viral RNA and DNA, bacterial DNA, fungal DNA, mammalian DNA, cDNA, mRNA, RNA and DNA fragments, oligonucleotides, synthetic oligonucleotides, modified oligonucleotides, single-stranded and double-stranded nucleic acids, natural and synthetic nucleic acids, and aptamers.

19. The method of claim 1 or claim 2 wherein the target analyte is a nucleic acid and the specific binding complement(s) is an /are oligonucleotide(s).

20. The method of claim 1 or claim 2 wherein the target analyte is a protein or antibody and the specific binding complement is an/are antibody(ies).

21. The method of claim 1 wherein the target analyte is a protein or antibody and the specific binding complement is a/are polyclonal antibody(ies).

22. The method of claim 1 wherein the target analyte is a gene sequence from a genomic DNA sample and the specific binding complements are oligonucleotides, the oligonucleotides having a sequence that is complementary to at least a portion of the gene sequence.

23. The method of claim 33, wherein the genomic DNA is mammalian or bacterial DNA.

24. The method of claim 1 or claim 2, wherein the nanoparticles are metallic nanoparticles.

25. The method of claim 1 or claim 2, wherein the metallic nanoparticles are gold nanoparticles.

26. The method of claim 1 or claim 2, wherein the nanoparticle is a core-shell particle.

27. The method of claim 1 or claim 2 further comprising providing a waveguide having capture probes attached thereto, the probes comprising a second binding complement being capable of recognizing a portion of the target analyte not recognized by the nanoparticles.

28. The method of claim 1 or claim 2, further comprising a step of contacting the target analyte, the nanoparticles and the substrate simultaneously or non-simultaneously.

29. The method of claim 1 or claim 2 wherein the wave guide comprises glass, quartz, or plastic.

30. The method of claim 1 or claim 2, wherein the polysaccharide is a neutral or anionic polysaccharide.

31. The method of claim 1 or claim 2, wherein the anionic polysaccharide is dextran sulfate.

32. The method of claim 2 wherein the target analyte is a gene sequence from a genomic DNA sample and the specific binding complements are oligonucleotides, the oligonucleotides having a sequence that is complementary to at least a portion of the gene sequence.

## Patentansprüche

1. Verfahren zum Nachweisen des Vorliegens oder Nichtvorliegens eines Targetanalyten in einer Probe, wobei der Targetanalyt mindestens zwei Teile besitzt, wobei das Verfahren die folgenden Schritte umfasst:
a. Bereitstellen eines Typs von Nanopartikeln, wobei an jeden Nanopartikel ein spezifisches Bindungskomplement eines Targetanalyten befestigt ist, und das spezifische Bindungskomplement ausgelegt ist, mindestens zwei verschiedene Teile des Targetanalyten zu erkennen;
b. Kontaktieren der Probe, der Nanopartikel und eines Polysaccharids mit einem Molekulargewicht im Bereich von 80.000-650.000 unter Bedingungen, die wirksam sind, die Bindung des spezifischen Bindungskomplementes an mindestens zwei Teile des Targetanalyten zu erlauben und einen freien Lichtstreuungskomplex in der Gegenwart eines Targetanalyten zu bilden, wobei der Lichtstreuungskomplex mindestes zwei Nanopartikel besitzt, die an den Targetanalyten gebunden sind;
c. Illuminieren des Lichtstreuungskomplexes unter Bedingungen, die wirksam sind, gestreutes Licht von diesem Komplex zu erzeugen; und
d. Detektieren einer Frequenzänderung in der Form von Farbe des Lichtes, das von diesem Komplex gestreut wird, das von der Interaktion zwischen den Nanopartikeln resultiert, die sich durch das Binden des spezifischen Bindungskomplements an den Targetanalyten beide angenähert haben.

2. Verfahren zum Nachweisen eines Targetanalyten in einer Probe, wobei der Targetanalyt mindestens zwei Teile besitzt, wobei das Verfahren die folgenden Schritte umfasst:
a. Bereitstellen mindestens zweier Typen von Nanopartikeln, wobei an jedem Typ von Nanopartikel ein spezifisches Bindungskomplement eines Targetanalyten befestigt ist, und das spezifische Bindungskomplement auf jedem Typen von Nanopartikel ausgelegt ist, verschiedene Teile des Targetanalyten zu erkennen;
b. Kontaktieren der Probe, der mindestens zwei Typen von Nanopartikel und eines Polysaccharids mit einem Molekulargewicht im Bereich von 80.000-650.000 unter Bedingungen, die wirksam sind, die Bindung des spezifischen Bindungskomplementes an mindestens zwei Teile des Targetanalyten zu ermöglichen und einen freien Lichtstreuungskomplex in der Gegenwart eines Targetanalyten zu bilden, wobei der Lichtstreuungskomplex mindestes zwei Nanopartikel besitzt, die an den Targetanalyten gebunden sind;
c. Illuminieren des Lichtstreuungskomplexes unter Bedingungen, die wirksam sind, gestreutes Licht von diesem Komplex zu erzeugen; und
d. Detektieren einer Frequenzänderung in der Form von Farbe des Lichtes, das von diesem Komplex gestreut wird, das von der Interaktion zwischen den Nanopartikeln resultiert, die sich durch das Binden des spezifischen Bindungskomplements an den Targetanalyten beide angenähert haben.

3. Verfahren von Anspruch 2, wobei der Targetanalyt ein Protein oder Antikörper ist und die spezifischen Bindungskomplemente monoklonale Antikörper sind.

4. Verfahren von Anspruch 2, wobei der Targetanalyt ein Protein oder Antikörper ist und eines der spezifischen Bindungskomplemente ein Aptamer ist und die andere spezifische Einheit ein Antikörper ist.

5. Verfahren von Anspruch 2, wobei der Targetanalyt ein Protein oder Antikörper ist und eines der spezifischen Bindungskomplemente Aptamere sind.

6. Verfahren von Anspruch 5, wobei die Nanopartikel Aptamer beschichtete Gold-Nanopartikel sind.

7. Verfahren von Anspruch 5, wobei die Nanopartikel Antikörper Gold-Nanopartikel sind.

8. Verfahren von Anspruch 5, wobei die Nanopartikel DNA modifizierte Gold-Nanopartikel sind.

9. Verfahren von Anspruch 2, wobei der Targetanalyt eine Gensequenz aus einer genomischen DNA ist und mindestens vier Teile besitzt, und der Kontaktierungsschritt das Kontaktieren der Gensequenz mit mindestens vier Typen von Nanopartikeln umfasst, an die Oligonukleotide befestigt sind, wobei die Oligonukleotide auf jedem Typ von Nanopartikeln eine Sequenz besitzen, die komplementär ist zu verschiedenen Teilen der Gensequenz.

10. Verfahren von Anspruch 9, wobei die genomische DNA bakterielle DNA ist.

11. Verfahren von Anspruch 2, wobei der Kontaktierungsschritt des Targetanalyten mit mindestens zwei Typen von Nanopartikeln das sequentielle Kontaktieren des Targetanalyten mit jedem der Typen von Nanopartikeln umfasst.

12. Verfahren von Anspruch 2, wobei der Kontaktierungsschritt des Targetanalyten mit mindestens zwei Typen von Nanopartikeln das gleichzeitige Kontaktieren der Nanopartikel mit dem Targetanalyten umfasst.

13. Verfahren nach Anspruch 1 oder Anspruch 2, wobei der Lichtstreuungskomplex auf einer Oberfläche eines Wellenleiters vor dem Illuminationsschritt vorliegt.

14. Verfahren nach Anspruch 1 oder Anspruch 2, wobei mindestens ein Teil des Lichtstreuungskomplexes auf einer Oberfläche eines Wellenleiters vor dem Illuminationsschritt vorliegt.

15. Verfahren nach Anspruch 1 oder Anspruch 2, wobei der Nanopartikel metallisch ist und der Detektionsschritt das Beobachten einer Änderung im Oberflächenplasmonbandes umfasst.

16. Verfahren nach Anspruch 1 oder Anspruch 2, wobei der Targetanalyt und das spezifische Bindungskomplement Komplemente eines spezifischen Bindungspaares sind.

17. Verfahren nach Anspruch 1 oder Anspruch 2, wobei Komplemente eine spezifischen Bindungspaares Nukleinsäure, Oligonukleotid, Peptidnukleinsäure, Polypeptid, Antikörper, Antigen, Kohlenhydrat, Protein, Peptid, Aminosäure, Hormon, Steroid, Vitamin, Wirkstoff, Virus, Polysaccharid, Lipide, Lipopolysaccharide, Glycoproteine, Lipoproteine, Nukleoproteine, Oligonukleotide, Antikörper, Immunglobuline, Albumin, Hämoglobin, Koagulationsfaktoren, Peptid- und Proteinhormone, Nicht-Peptidhormone, Interleukine, Interferone, Zytokine, Peptide umfassend ein Tumor spezifisches Epitop, Zellen, Zelloberflächen Moleküle, Mikroorganismen, Fragmente, Teile, Komponenten oder Produkte von Mikroorganismen, kleine organische Moleküle, Nukleinsäuren und Oligonukleotide, Metabolite von oder Antikörper zu jeder der obigen Substanzen umfassen.

18. Verfahren von Anspruch 28, wobei Nukleinsäure und Oligonukleotid Gene, virale RNA und DNA, bakterielle DNA, fungale DNA, Säuger DNA, cDNA, mRNA, RNA und DNA Fragmente, Oligonukleotide, sythetische Oligonukleotide, modifizierte Oligonukleotide, Einzelstrang- und Doppelstrang-Nukleinsäuren, natürliche und sythetische Nukleinsäure und Aptamere umfassen.

19. Verfahren nach Anspruch 1 oder Anspruch 2, wobei der Targetanalyt eine Nukleinsäure und das/die spezifischen Bindungskomplement(e) ein Oligonukleotid(e) ist/sind.

20. Verfahren nach Anspruch 1 oder Anspruch 2, wobei der Targetanalyt ein Protein oder Antikörper ist und das spezifische Bindungskomplement ein Antiköper ist/sind.

21. Verfahren nach Anspruch 1, wobei der Targetanalyt ein Protein oder Antikörper ist und das spezifische Bindungskomplement ein polyklonaler/e Antiköper ist/sind.

22. Verfahren nach Anspruch 1, wobei der Targetanalyt eine Gensequenz aus einer genomischen DNA Probe ist und die spezifischen Bindungskomplemente Oligonukleotide sind, wobei die Oligonukleotide eine Sequenz besitzen, die zum mindestem einem Teil der Gensequenz komplementär ist.

23. Verfahren von Anspruch 33, wobei die genomische DNA Säuger oder bakterielle DNA ist.

24. Verfahren nach Anspruch 1 oder Anspruch 2, wobei die Nanopartikel metallische Nanopartikel sind.

25. Verfahren nach Anspruch 1 oder Anspruch 2, wobei die metallischen Nanopartikel Gold-Nanopartikel sind.

26. Verfahren nach Anspruch 1 oder Anspruch 2, wobei der Nanopartikel ein Kern-Schalen Partikel ist.

27. Verfahren nach Anspruch 1 oder Anspruch 2, ferner umfassend das Bereitstellen eines Wellenführung, an die Fängersonden angebracht sind, wobei die Sonden ein zweites Bindungskomplement umfassen, das in der Lage ist, eine Teil des Targetanalyten zu erkennen, der nicht durch die Nanopartikel erkannt wird.

28. Verfahren nach Anspruch 1 oder Anspruch 2, ferner umfassend das simultane oder nicht simultane Kontaktieren des Targetanalyten, der Nanopartikel und des Substrats.

29. Verfahren nach Anspruch 1 oder Anspruch 2, wobei die Wellenführung Glas, Quarz oder Plastik umfasst.

30. Verfahren nach Anspruch 1 oder Anspruch 2, wobei das Polysaccharid ein neutrales oder anionisches Polysaccharid ist.

31. Verfahren nach Anspruch 1 oder Anspruch 2, wobei das anionische Polysaccharid Dextransulfat ist.

32. Verfahren nach Anspruch 2, wobei der Targetanalyt eine Gensequenz aus einer genomischen DNA Probe ist und die spezifischen Bindungskomplemente Oligonukleotide sind, wobei die Oligonukleotide eine Sequenz besitzen, die zu mindestens einem Teil der Gensequenz komplementär ist.

## Revendications

1. Procédé de détection de la présence ou de l'absence d'un analyte cible dans un échantillon, l'analyte cible ayant au moins deux parties, le procédé comprenant :
a. la fourniture d'un type de nanoparticules, chaque nanoparticule ayant un complément de liaison spécifique d'un analyte cible lié à celui-ci, le complément de liaison spécifique étant capable de reconnaître au moins deux parties différentes de l'analyte cible ;
b. la mise en contact de l'échantillon, des nanoparticules et d'un polysaccharide ayant un poids moléculaire de l'ordre de 80 000 à 650 000 dans des conditions efficaces pour permettre la liaison du complément de liaison spécifique à au moins deux parties de l'analyte cible et former un complexe de dispersion de lumière libre en présence d'un analyte cible, le complexe de dispersion de lumière ayant au moins deux nanoparticules liées à l'analyte cible ;
c. l'éclairage du complexe de dispersion de lumière dans des conditions efficaces pour produire une lumière dispersée à partir dudit complexe ; et
d. la détection d'un changement de fréquence sous forme de couleur de la lumière dispersée par ledit complexe, résultant d'une interaction entre les nanoparticules qui sont rapprochées par la liaison du complément de liaison spécifique à l'analyte cible.

2. Procédé de détection d'un analyte cible dans un échantillon, l'analyte cible ayant au moins deux parties, le procédé comprenant :
a. la fourniture d'au moins deux types de nanoparticules, chaque type de nanoparticules ayant un complément de liaison spécifique d'un analyte cible lié à celui-ci, le complément de liaison spécifique sur chaque type de nanoparticules étant capable de reconnaître différentes parties de l'analyte cible ;
b. la mise en contact de l'échantillon, au moins des deux types de nanoparticules et d'un polysaccharide ayant un poids moléculaire de l'ordre de 80 000 à 650 000 dans des conditions suffisantes pour permettre la liaison des compléments de liaison spécifiques à au moins deux parties de l'analyte cible et former un complexe de dispersion de lumière libre en présence de l'analyte cible, le complexe de dispersion de lumière ayant au moins deux nanoparticules liées à l'analyte cible ; et
c. l'éclairage du complexe de dispersion de lumière dans des conditions efficaces pour produire une lumière dispersée à partir dudit complexe ; et
d. la détection d'un changement de fréquence sous forme de couleur de la lumière dispersée par ledit complexe résultant de l'interaction entre les nanoparticules qui sont rapprochées par la liaison des compléments de liaison spécifiques à l'analyte cible.

3. Procédé selon la revendication 2, dans lequel l'analyte cible est une protéine ou un anticorps et les compléments de liaison spécifiques sont des anticorps monoclonaux.

4. Procédé selon la revendication 2, dans lequel l'analyte cible est une protéine ou un anticorps et l'un des compléments de liaison spécifique est un aptamère et l'autre élément de liaison spécifique est un anticorps.

5. Procédé selon la revendication 2, dans lequel l'analyte cible est une protéine ou un anticorps et l'un des compléments de liaison spécifiques est un aptamère.

6. Procédé selon la revendication 5, dans lequel les nanoparticules sont des aptamères revêtus de nanoparticules d'or.

7. Procédé selon la revendication 5, dans lequel les nanoparticules sont des nanoparticules d'or d'anticorps.

8. Procédé selon la revendication 5, dans lequel les nanoparticules sont des nanoparticules d'or modifiées par l'ADN.

9. Procédé selon la revendication 2, dans lequel l'analyte cible est une séquence de gène d'un ADN génomique et a au moins quatre parties et ladite étape de mise en contact comprend la mise en contact de la séquence de gène avec au moins quatre types de nanoparticules ayant des oligonucléotides liés à celles-ci, les oligonucléotides sur les types respectifs de nanoparticules ayant une séquence complémentaire à des parties différentes de la séquence de gène.

10. Procédé selon la revendication 9, dans lequel l'ADN génomique est l'ADN bactérien.

11. Procédé selon la revendication 2, dans lequel l'étape de mise en contact de l'analyte cible avec au moins deux types de nanoparticules comprend la mise en contact séquentielle de l'analyte cible avec chacun des types de nanoparticules.

12. Procédé selon la revendication 2, dans lequel l'étape de mise en contact de l'analyte cible avec au moins deux types de nanoparticules comprend la mise en contact des nanoparticules avec l'analyte cible en même temps.

13. Procédé selon la revendication 1 ou la revendication 2, dans lequel le complexe de dispersion de lumière est présent sur une surface d'un guide d'ondes avant ladite étape d'éclairage.

14. Procédé selon la revendication 1 ou la revendication 2, dans lequel au moins une partie du complexe de dispersion de lumière est présente sur une surface d'un guide d'ondes avant ladite étape d'éclairage.

15. Procédé selon la revendication 1 ou la revendication 2, dans lequel la nanoparticule est métallique et ladite étape de détection comprend l'observation d'un changement dans la bande de plasmon de surface.

16. Procédé selon la revendication 1 ou la revendication 2, dans lequel l'analyte cible et le complément de liaison spécifique sont des compléments d'une paire de liaison spécifique.

17. Procédé selon la revendication 1 ou la revendication 2, dans lequel les compléments d'une paire de liaison spécifique comprennent un acide nucléique, un oligonucléotide, un acide nucléique peptidique, un polypeptide, un anticorps, un antigène, un glucide, une protéine, un peptide, un acide aminé, une hormone, un stéroïde, une vitamine, un médicament, un virus, des polysaccharides, des lipides, des lipopolysaccharides, des glycoprotéines, des lipoprotéines, des nucléoprotéines, des oligonucléotides, des anticorps, des immunoglobulines, de l'albumine, de l'hémoglobine, des facteurs de coagulation, des hormones peptidiques et protéiques, des hormones non peptidiques, des interleukines, des interférons, des cytokines, des peptides comprenant un épitope spécifique à une tumeur, des cellules, des molécules de surface cellulaire, des microorganismes, des fragments, des parties, composants ou produits de microorganismes, des petites molécules organiques, des acides nucléiques et des oligonucléotides, des métabolites ou des anticorps de toute substance ci-dessus.

18. Procédé selon la revendication 28, dans lequel l'acide nucléique et l'oligonucléotide comprennent des gènes, un ARN et un ADN viral, un ADN bactérien, un ADN fongique, un ADN de mammifère, un ADNc, un ARNm, des fragments d'ARN et d'ADN, des oligonucléotides, des oligonucléotides synthétiques, des oligonucléotides modifiés, des acides nucléiques à brin simple et à brin double, des acides nucléiques naturels et synthétiques et des aptamères.

19. Procédé selon la revendication 1 ou la revendication 2, dans lequel l'analyte cible est un acide nucléique et le/les complément(s) de liaison spécifique est/sont un/des oligonucléotide(s).

20. Procédé selon la revendication 1 ou la revendication 2, dans lequel l'analyte cible est une protéine ou un anticorps et le complément de liaison spécifique est un/des anticorps.

21. Procédé selon la revendication 1, dans lequel l'analyte cible est une protéine ou un anticorps et le complément de liaison spécifique est un/des anticorps.

22. Procédé selon la revendication 1, dans lequel l'analyte cible est une séquence de gène d'un échantillon d'ADN génomique et les compléments de liaison spécifique sont des oligonucléotides, les oligonucléotides ayant une séquence qui est complémentaire à au moins une partie de la séquence de gène.

23. Procédé selon la revendication 33, dans lequel l'ADN génomique est un ADN de mammifère ou un ADN bactérien.

24. Procédé selon la revendication 1 ou la revendication 2, dans lequel les nanoparticules sont des nanoparticules métalliques.

25. Procédé selon la revendication 1 ou la revendication 2, dans lequel les nanoparticules métalliques sont des nanoparticules d'or.

26. Procédé selon la revendication 1 ou la revendication 2, dans lequel la nanoparticule est une particule à noyau - coque.

27. Procédé selon la revendication 1 ou la revendication 2, comprenant en outre la fourniture d'un guide d'ondes ayant des sondes de capture fixées à celui-ci, les sondes comprenant un deuxième complément de liaison qui est capable de reconnaître une partie de l'analyte cible non reconnu par les nanoparticules.

28. Procédé selon la revendication 1 ou la revendication 2, comprenant en outre une étape de mise en contact de l'analyte cible, les nanoparticules et le substrat, de façon simultanée ou non simultanée.

29. Procédé selon la revendication 1 ou la revendication 2, dans lequel le guide d'ondes comprend le verre, le quartz ou le plastique.

30. Procédé selon la revendication 1 ou la revendication 2, dans lequel le polysaccharide est un polysaccharide neutre ou anionique.

31. Procédé selon la revendication 1 ou la revendication 2, dans lequel le polysaccharide anionique est le sulfate de dextrane.

32. Procédé selon la revendication 2, dans lequel l'analyte cible est une séquence de gène d'un échantillon d'ADN génomique et les compléments de liaison spécifiques sont des oligonucléotides, les oligonucléotides ayant une séquence qui est complémentaire à au moins une partie de la séquence de gène.
